# EUROPEAN PATENT SPECIFICATION

(11) **EP 4 305 894 B1**
(45) Date of publication and mention of the grant of the patent: **08.07.2026**
(21) Application number: 21936346.2
(22) Date of filing: 13.04.2021
(51) Int. Cl.: H04W 74/0833, H04W 48/18, H04W 48/16, H04W 74/0836, H04W 74/0838

(54) **SLICE AWARE CELL SELECTION AND RANDOM ACCESS TECHNIQUES**
SLICE-BEWUSSTE ZELLAUSWAHL UND DIREKTZUGRIFFSVERFAHREN
TECHNIQUES DE SÉLECTION DE CELLULES ET D'ACCÈS ALÉATOIRE PERCEVANT LES TRANCHES

(43) Date of publication of application: 17.01.2024
(73) Proprietor: ZTE Corporation, Shenzhen, Guangdong 518057 (CN)
(72) Inventor: GAO, Yuan, Shenzhen, Guangdong 518057 (CN); HUANG, He, Shenzhen, Guangdong 518057 (CN)
(74) Representative: Vossius & Partner Patentanwälte Rechtsanwälte mbB
(86) International application number: PCT/CN2021/086843
(87) International publication number: WO 2022/217451

(56) References cited:
- WO-A1-2017/157118
- WO-A1-2018/030508
- WO-A1-2018/083664
- WO-A1-2022/153242
- US-A1- 2018 192 445
- US-A1- 2020 107 378
- APPLE: "Discussion on slice based RACH", vol. RAN WG2, no. Electronic; 20210412 - 20210420, 2 April 2021 (2021-04-02), XP052175209, Retrieved from the Internet <URL:https://ftp.3gpp.org/tsg_ran/WG2_RL2/TSGR2_113bis-e/Docs/R2-2103882.zip R2-2103882_RACH in RAN slicing.docx> [retrieved on 20210402]
- SPREADTRUM COMMUNICATIONS: "Consideration on slice based RACH configuration", vol. RAN WG2, no. electronic; 20210412 - 20210420, 2 April 2021 (2021-04-02), XP052174838, Retrieved from the Internet <URL:https://ftp.3gpp.org/tsg_ran/WG2_RL2/TSGR2_113bis-e/Docs/R2-2103240.zip R2-2103240.doc> [retrieved on 20210402]
- ZTE CORPORATION ET AL: "Discussion on slice specific RACH resources and RACH prioritization", vol. RAN WG2, no. Electronic; 20210412 - 20210420, 2 April 2021 (2021-04-02), XP052175330, Retrieved from the Internet <URL:https://ftp.3gpp.org/tsg_ran/WG2_RL2/TSGR2_113bis-e/Docs/R2-2104064.zip R2-2104064_Discussion on slice specific RACH resources and RACH prioritization.docx> [retrieved on 20210402]
- CATT: "Analysis on slice based RACH configuration", vol. RAN WG2, no. electronic; 20210412 - 20210420, 2 April 2021 (2021-04-02), XP052175287, Retrieved from the Internet <URL:https://ftp.3gpp.org/tsg_ran/WG2_RL2/TSGR2_113bis-e/Docs/R2-2104019.zip R2-2104019 Analysis on Slice based RACH1.docx> [retrieved on 20210402]
- "3rd Generation Partnership Project; Technical Specification Group Radio Access Network NR Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 4 January 2018 (2018-01-04), pages 1 - 188, XP051392365, [retrieved on 20180104]
- ZTE CORPORATION, SANECHIPS: "Consideration on the scope and solutions for RAN slicing enhancement", 3GPP DRAFT; R2-2006871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20200817 - 20200828, 7 August 2020 (2020-08-07), Mobile Competence Centre ; 650, route des Lucioles ; F-06921 Sophia-Antipolis Cedex ; France , XP051911755
- QUALCOMM INCORPORATED: "Discussion on RAN slicing enhancement", 3GPP DRAFT; R2-2006767, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20200817 - 20200828, 7 August 2020 (2020-08-07), Mobile Competence Centre ; 650, route des Lucioles ; F-06921 Sophia-Antipolis Cedex ; France , XP051911674
- ZTE CORPORATION, SANECHIPS: "Consideration on slice specific cell selection and reselection", 3GPP DRAFT; R2-2101194, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051974172
- XIAOMI: "Considerations on the solutions of slice based RACH configuration", 3GPP DRAFT; R2-2100424, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210125 - 20210205, 15 January 2021 (2021-01-15), Mobile Competence Centre ; 650, route des Lucioles ; F-06921 Sophia-Antipolis Cedex ; France , XP051973606

## Description

### TECHNICAL FIELD

This disclosure is directed generally to digital wireless communications.

### BACKGROUND

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultra-low latency, high reliability and other emerging business needs. *"*Discussion on slice based RACH", 3GPP Draft; R2-2103882, 3rd Generation Partnership Project (3gpp), Mobile Competence Centre ; 650, Route des Lucioles ; F-06921 Sophia-Antipolis Cedex ; France, vol. RAN WG2, no. Electronic; 20210412 - 20210420 2 April 2021 (2021-04-02), XP052175209, and *"*Consideration on slice based RACH configuration", 3GPP Draft; R2-2103240, 3rd Generation Partnership Project (3gpp), Mobile Competence Centre ; 650, Route des Lucioles ; F-06921 Sophia-Antipolis Cedex; France, vol. RAN WG2, no. electronic; 20210412 - 20210420 2 April 2021 (2021-04-02), XP052174838 are relevant documents of the prior art.

### SUMMARY

The invention is set out in the appended set of claims. Techniques are disclosed for slice aware cell selection (or cell reselection) and/or random-access techniques.

A first example wireless communication method includes performing, by a communication device, a cell selection technique using a one set of cell selection related information associated with a slice, where the one set of cell selection related information is from multiple sets of cell selection related information related to a plurality of slices, and where each set of cell selection related information is associated with one slice from the plurality of slices.

In some embodiments, the communication device selects or determines one set of cell selection related information associated with a slice from multiple sets of cell selection related information related to a plurality of slices; and performs a cell selection technique using the one set of cell selection related information associated with the slice, where each set of cell selection related information is associated with one slice from the plurality of slices.

In some embodiments, the multiple sets of cell selection related information include a supported slice information for each slice from the plurality of slices, and for each slice of the plurality of slices, the supported slice information indicates whether a slice is supported by a plurality of cells or by a plurality of frequencies. In some embodiments, the multiple sets of cell selection related information include a cell selection priority information for each slice from the plurality of slices, and for each slice of the plurality of slices, the cell selection priority information indicates a cell selection priority value for a slice, and the cell selection priority value indicates a priority of (1) a cell associated with the slice or (2) a frequency associated with the slice. In some embodiments, the multiple sets of cell selection related information include a redirection target information for each slice from the plurality of slices, and for each slice of the plurality of slices, the redirection target information indicates a frequency to use for the cell selection technique for a slice. In some embodiments, the communication device performs the cell selection technique with a cell by using a cell selection priority value of (1) the cell or (2) a frequency deployed by the cell, and the cell selection priority value is associated with the slice that is first in order in a list of slices in an allowed single network slice selection assistance information (S-NSSAI) or in a requested S-NSSAI.

In some embodiments, the communication device performs the cell selection technique with a cell by using a cell selection priority value of (1) the cell or (2) a frequency deployed by the cell, and the cell selection priority value is associated with any one of the following that is associated with the slice that is first in order in a list of slices in an allowed single network slice selection assistance information (S-NSSAI) or in a requested S-NSSAI: a slice group, an access category, and an access category group. In some embodiments, the communication device performs the cell selection technique with a cell by using a cell selection priority value of (1) the cell or (2) a frequency deployed by the cell, the slice is associated with the cell selection priority value, and the slice is, in an order, first to be associated with the cell selection priority value in a list of slices in an allowed single network slice selection assistance information (S-NSSAI) or in a requested S-NSSAI. In some embodiments, the communication device performs the cell selection technique with a cell by using a frequency having a highest priority, the frequency is associated with the cell, and the frequency has the highest priority in response to the frequency being associated with a largest number of supported slices from an allowed single network slice selection assistance information (S-NSSAI) or from a requested S-NSSAI.

In some embodiments, the communication device performs the cell selection technique with a cell by using a frequency having a highest priority, the frequency is associated with the cell, and the frequency has the highest priority in response to the frequency being supported by a the slice that is first in order in a list of slices in an allowed single network slice selection assistance information (S-NSSAI) or in a requested S-NSSAI. In some embodiments, the communication device performs the cell selection technique with a cell by using a frequency having a highest priority, the frequency is associated with the cell, and the frequency has the highest priority in response to the frequency being supported by any one of the following that is associated with the slice that is first in order in a list of slices in an allowed single network slice selection assistance information (S-NSSAI) or in a requested S-NSSAI: a slice group, an access category, and an access category group.

A second example wireless communication method includes performing, by a communication device, a random access technique using one set of random access channel (RACH) configurations associated with a slice, where the one set of RACH configurations is from multiple sets of RACH configurations related to a plurality of slices, where each set from the multiple sets of RACH configurations is associated with one slice from the plurality of slices.

In some embodiments, a communication device selects or determines one set of RACH configurations for a slice from multiple sets of RACH configurations related to a plurality of slices, where each set of RACH configurations is associated with one slice from the plurality of slices; and performs a random access technique using the one set of RACH configurations associated with the slice.

In some embodiments, the multiple sets of RACH configurations includes resources for performing a 2-step random access technique or a 4-step random access technique for each slice for the plurality of slices, the resources includes locations of RACH occasions in frequency domain and time domain, and the resources are common resources associated with a plurality of communication nodes or dedicated resources assigned to the communication node. In some embodiments, the multiple sets of RACH configurations include a random access prioritization configuration that indicates a configuration for a prioritized random access procedure for each slice of a plurality of slices. In some embodiments, the multiple sets of RACH configurations include a first value that indicates a maximum number of failed random access attempts allowed for each slice from the plurality of slices and a second value that indicates a threshold reference signal received power (RSRP) for each slice from the plurality of slices.

In some embodiments, the multiple sets of RACH configurations include a first value that indicates a maximum number of failed random access attempts allowed for each slice from the plurality of slices or a second value that indicates a threshold reference signal received power (RSRP) for each slice from the plurality of slices. In some embodiments, the communication device performs the random access technique by performing a 2-step random access technique or by performing a 4-step random access technique. In some embodiments, the communication device performs a 2-step random access technique or a 4-step random access technique by using common resources associated with a plurality of communication nodes in response to the communication device determining that the random access technique performed using the one set of RACH configurations associated with the slice has resulted in a failed outcome for a number of times. In some embodiments, the communication device performs a 4-step random access technique by using another set of RACH configurations associated with the slice or by using common resources associated with a plurality of communication nodes in response to the communication device determining that a 2-step random access technique performed using the one set of RACH configurations associated with the slice has resulted in a failed outcome for a number of times.

In some embodiments, the communication device performs the random access technique by using a first set of RACH prioritization parameters configured for the communication device configured for multimedia priority service (MPS) or for mission critical service (MCS), or the communication device performs the random access technique by using a second set of RACH prioritization parameters configured for a slice.

A third example wireless communication method includes transmitting, by a network device, multiple sets of cell selection related information related to a plurality of slices, where each set of cell selection related information is associated with one slice from the plurality of slices.

In some embodiments, the multiple sets of cell selection related information include a supported slice information for each slice from the plurality of slices, and for each slice of the plurality of slices, the supported slice information indicates whether a slice is supported by a plurality of cells or by a plurality of frequencies. In some embodiments, the multiple sets of cell selection related information include a cell selection priority information for each slice from the plurality of slices, and for each slice of the plurality of slices, the cell selection priority information indicates a cell selection priority value for a slice, and the cell selection priority value indicates a priority of (1) a cell associated with the slice or (2) a frequency associated with the slice. In some embodiments, the multiple sets of cell selection related information include a redirection target information for each slice from the plurality of slices, and for each slice of the plurality of slices, the redirection target information indicates a frequency to use for the cell selection technique for a slice.

In some embodiments, the multiple sets of cell selection related information are transmitted via a system information to a plurality of communication devices comprising the communication device. In some embodiments, the multiple sets of cell selection related information are transmitted via a radio resource control (RRC) signaling dedicated to the communication device.

A fourth example wireless communication method includes performing, by a network device, a first transmission comprising multiple sets of random access channel (RACH) configurations related to a plurality of slices, where each set from the multiple sets of RACH configurations is associated with one slice from the plurality of slices; and receiving, by the network device from a communication device, a random access preamble using one set of RACH configurations associated with a slice from the multiple sets of RACH configurations.

In some embodiments, the method further includes performing, by a network device, a second transmission comprising a message to the communication device, where the message comprises an identifier of the one set of RACH configurations associated with the slice to use by the communication device, and where the random access preamble is received in response to the second transmission of the message. In some embodiments, the message is included in a paging message or a paging downlink control information (DCI) or a short message. In some embodiments, the multiple sets of RACH configurations includes resources for performing a 2-step random access technique or a 4-step random access technique for each slice for the plurality of slices, the resources includes locations of RACH occasions in frequency domain and time domain, and the resources are common resources associated with a plurality of communication nodes or dedicated resources assigned to the communication node. In some embodiments, the multiple sets of RACH configurations include a random access prioritization configuration that indicates a configuration for a prioritized random access procedure for each slice of a plurality of slices.

In some embodiments, the multiple sets of RACH configurations include a first value that indicates a maximum number of failed random access attempts allowed for each slice from the plurality of slices and a second value that indicates a threshold reference signal received power (RSRP) for each slice from the plurality of slices. In some embodiments, the multiple sets of RACH configurations include a first value that indicates a maximum number of failed random access attempts allowed for each slice from the plurality of slices or a second value that indicates a threshold reference signal received power (RSRP) for each slice from the plurality of slices. In some embodiments, the first transmission comprising the multiple sets of RACH configurations is performed via a system information to a plurality of communication devices comprising the communication device. In some embodiments, the first transmission comprising the multiple sets of RACH configurations is performed via a radio resource control (RRC) signaling dedicated to the communication device.

In yet another exemplary aspect, the above-described methods are embodied in the form of processor-executable code and stored in a non-transitory computer-readable storage medium. The code included in the computer readable storage medium when executed by a processor, causes the processor to implement the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIG. 1 shows an example flowchart for performing a cell (re)selection and/or random access procedure.
FIG. 2 shows an exemplary flowchart of a method for performing a slice aware cell selection technique.
FIG. 3 shows an exemplary flowchart of a method for performing a slice aware random access technique.
FIG. 4A shows a flowchart of a method for a network device providing multiple sets of cell selection related information for multiple slices for a communication device to perform a slice aware cell selection technique.
FIG. 4B shows flowchart of a method for a network device providing multiple sets of RACH configurations for multiple slices for a communication device to perform a slice aware random access technique.
FIG. 5 shows an exemplary block diagram of a hardware platform that may be a part of a network node or a user equipment.
FIG. 6 shows an example of wireless communication including a base station (BS) and user equipment (UE) based on some implementations of the disclosed technology.

### DETAILED DESCRIPTION

Network Slicing has been introduced in New Radio (NR), which is a concept to allow differentiated treatment depending on each customer requirements. With slicing, it is possible for Mobile Network Operators (MNO) to consider customers as belonging to different tenant types with each having different service requirements that govern in terms of what slice types each tenant is eligible to use based on Service Level Agreement (SLA) and subscriptions.

To support slice-aware cell (re)selection and access, different cell (re)selection priority, redirection targets, RACH resources in frequency and time domain, random access preambles and RACH prioritization parameters can be provided for different slices but a user equipment (UE) behavior in selecting and using these configurations during cell (re)selection and random access procedure is not clear.

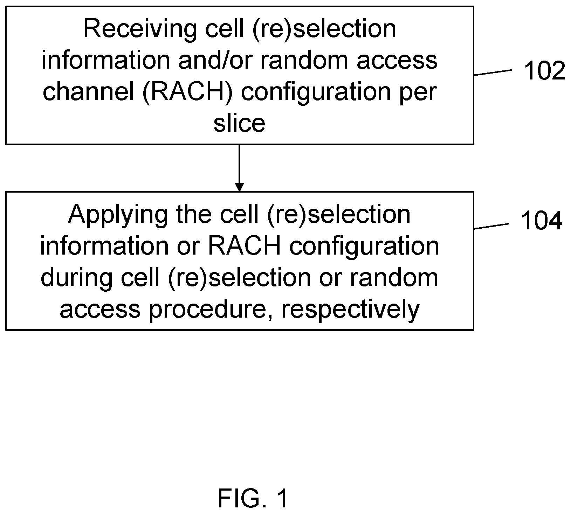

FIG. 1 shows an example flowchart for performing a cell (re)selection and/or random access procedure. Operation 102 includes the UE (or communication device) receiving cell (re)selection information and/or RACH configuration per slice. Operation 104 includes the UE applying the cell (re)selection information or RACH configuration during cell (re)selection or random access procedure, respectively. In some embodiments, a UE receives cell (re)selection information and/or RACH configuration per slice/slice group/access category/access category group/UE type/service type and the UE applies the cell (re)selection information and/or RACH configuration during cell (re)selection and/or random access procedure for a certain slice/slice group/access category/access category group/UE type/service type. In this patent document, the term "cell (re)selection" can include cell selection or cell reselection and the term "cell" may include base station or network node.

Example Item 1: At operation 102 in FIG. 1, the cell (re)selection information per slice may include any one or more of the following:
- The supported slice information and/or reselection priority per slice/the supported slice group information and/or the reselection priority per slice group/the supported access category information and/or the reselection priority per access category/the supported access category group information and/or the reselection priority per access category group/the supported UE type information and/or the reselection priority per UE type/the supported service type and/or the reselection priority per service type of intra-frequency/inter-frequency/inter-RAT cells. Such information can be provided via SIB2/3/4/5 or a newly introduced SIB. The corresponding SIB can be configured as on demand SIB. Full set or segmentation of the cell (re)selection information per slice/slice group/access category/access category group/UE type/service type can be provided in a SIB. The supported slice/slice group/access category/access category group/UE type/service type information and/or the reselection priority information per slice/slice group/access category/access category group/UE type/service type, which may be provided by SIB, may be broadcast to one or more UEs within a transmission range of a cell.
- The supported slice/slice group/access category/access category group/UE type/service type information and/or dedicated reselection priority per slice/dedicated reselection priority per slice group/dedicated reselection priority per access category/dedicated reselection priority per access category group/dedicated reselection priority per UE type/dedicated reselection priority per service type in RRCRelease message. The supported slice/slice group/access category/access category group/UE type/service type information and/or the reselection priority information per slice/slice group/access category/access category group/UE type/service type, can be indicated to a specific UE via a RRCRelease message. A timer can be configured in the RRCRelease message, where the timer indicates an amount of time when The supported slice/slice group/access category/access category group/UE type/service type information and/or the reselection priority information per slice/slice group/access category/access category group/UE type/service type, is valid. For example, if the UE determines that a timer received in the RRCRelease message has not expired, then the UE may use the supported slice/slice group/access category/access category group/UE type/service type information and/or the reselection priority information per slice/slice group/access category/access category group/UE type/service type, to perform cell (re)selection or RACH as explained in this patent document. In another example, if the UE determines that the timer received in the RRCRelease message has expired, then the UE may use the supported slice/slice group/access category/access category group/UE type/service type information and/or the reselection priority information per slice/slice group/access category/access category group/UE type/service type, which may be broadcast to one or more UEs via SIB.

- The redirection target information per slice/slice group/access category/access category group/UE type/service type can be indicated in RRCRelease message. For each of a plurality of slices, a redirection target information can indicate a frequency target for cell (re)selection for a slice/slice group/access category/access category group/UE type/service type. A timer can be configured in the RRCRelease message, where the timer indicates an amount of time when the redirection target information per slice/slice group/access category/access category group/UE type/service type is valid. For example, if the UE determines that a timer received in the RRCRelease message has not expired, then the UE may use the redirection target information per slice/slice group/access category/access category group/UE type/service type to perform cell (re)selection or RACH as explained in this patent document. In another example, if the UE determines that the timer received in the RRCRelease message has expired, then the UE may use the supported slice/slice group/access category/access category group/UE type/service type information and reselection priority information per slice/slice group/access category/access category group/UE type/service type, which may be broadcast to one or more UEs via SIB.

The supported slice information in SIB or RRCRelease message can be expressed as S-NSSAI/SST/part of the S-NSSAI/Slice associated access category/Slice index/Slice group index.

Different cell (re)selection information per slice/slice group/access category/access category group/UE type/service type can be provided for different PLMNs sharing the same cell. Common cell (re)selection information per slice/slice group/access category/access category group/UE type/service type can be provided for a cell and applicable to all the PLMNs sharing the same cell.

Example Item 2: At operation 104 in FIG. 1, UE applies the cell (re)selection information per slice during the cell (re)selection procedure may include the UE performing any of the following operations in the example items 2.1 to 2.5:
Example Item 2.1: Usage of the per slice/slice group/access category/access category/slice group/access category/access category group/UE type/service type group reselection priority in system information
• UE applies the reselection priority corresponding to (or associated with) the first slice in allowed/requested S-NSSAI(s) or the reselection priority corresponding to the slice group/access category/access category group the first slice belongs to, if configured. If no reselection priority is configured for the first slice/slice group/access category/access category group, UE applies the common priority. In some embodiments, the common priority includes a default priority that is applicable to one or more (or all) slices.
• Example: As shown in Table 1 below, the UE may select and apply the reselection priority for slice#1 (indicated in bold italicized text) at least because the UE determines that slice #1 is the first slice.

**Table 1**

| Allowed S-NSSAI(s) | Reselection priority |
|---|---|
| ***Slice#1*** | ***Provided*** |
| Slice#2 | |
| Slice#3 | Provided |

• UE applies the reselection priority corresponding to the first slice/slice group/access category/access category group with per slice reselection priority configured.
• Example: As shown in Table 2 below, the UE may select and apply the reselection priority for slice#2 (indicated in bold italicized text) at least because the UE determines that slice #2 is the first slice with reselection priority provided.

**Table 2**

| Allowed S-NSSAI(s) | Reselection priority |
|---|---|
| Slice#1 | |
| ***Slice#2*** | ***Provided*** |
| Slice#3 | Provided |

Example Item 2.2: Usage of the supported slice information (for the case when no specific priority configured for any slice) in system information
• UE considers or determines the frequency with the largest number of the supported slices overlapped with the allowed/request S-NSSAI(s) to be associated with (or to have) the highest priority.
• Example: As shown in Table 3 below, the UE may determine that the frequency F3 (indicated in bold italicized text) is associated with the highest priority at least because the UE determines that F3 has the largest number of the supported slice overlapped with the allowed/request S-NSSAI(s).

**Table 3**

| Allowed S-NSSAI(s) | F1 | F2 | ***F3*** |
|---|---|---|---|
| Slice#1 | | supported | |
| Slice#2 | supported | | ***supported*** |
| Slice#3 | supported | | ***supported*** |
| Slice#4 | | supported | ***supported*** |

• UE considers or determines the frequency supporting the first slice in the allowed/request S-NSSAI(s), or the frequency supporting the slice group/access category/access category group the first slice belongs to, to be associated with the highest priority.
• Example: As shown in Table 4 below, the UE may determine that the frequency F2 (indicated in bold italicized text) is associated with the highest priority at least because the UE determines that F2 supports the first slice in the allowed/request S-NSSAI(s).

**Table 4**

| Allowed S-NSSAI(s) | F1 | ***F2*** | F3 |
|---|---|---|---|
| Slice#1 | | ***supported*** | |
| Slice#2 | supported | | supported |
| Slice#3 | supported | | supported |
| Slice#4 | | ***supported*** | supported |

• If more than one frequency supports the first slice in the allowed/request S-NSSAI(s), the UE may determine that the frequency configured with higher reselection priority (e.g., the common reselection priority) will be associated with the highest priority.
• Example: As shown in Table 5 below, the UE may determine that the frequency F3 (indicated in bold italicized text) will be considered as the highest priority at least because the UE determines that both F2 and F3 support the first slice but the common reselection priority configured for F3 is higher than that of F2.

**Table 5**

| | | F1 | F2 | ***F3*** |
|---|---|---|---|---|
| Common reselection priority | | 2 | 4 | ***6*** |
| Allowed S-NSSAI(s) | Slice#1 | | supported | ***supported*** |
| | Slice#2 | supported | | ***supported*** |
| | Slice#3 | supported | | ***supported*** |
| | Slice#4 | | supported | ***supported*** |

Example Item 2.3: Usage of the per slice dedicated reselection priority in RRCRelease message
• UE applies the dedicated reselection priority corresponding to the first slice in allowed/requested S-NSSAI(s), if configured. If no reselection priority is configured for the first slice, UE applies the common dedicated priority.
• Example: As shown in Table 6 below, the UE applies the dedicated reselection priority for slice#1 (shown in bold italicized text) at least because the UE determines that slice #1 is the first slice in allowed/requested S-NSSAI(s).

**Table 6**

| Allowed S-NSSAI(s) | Dedicated Reselection priority |
|---|---|
| ***Slice#1*** | ***Provided*** |
| Slice#2 | |
| Slice#3 | Provided |

• UE applies the dedicated reselection priority corresponding to the first slice with per slice reselection priority configured.
• Example: As shown in Table 7 below, the UE selects and applies the dedicated reselection priority for slice#2 (shown in bold italicized text) at least because the UE determines that slice #2 is the first slice with dedicated priority provided.

**Table 7**

| Allowed S-NSSAI(s) | Dedicated Reselection priority |
|---|---|
| Slice#1 | |
| ***Slice#2*** | ***Provided*** |
| Slice#3 | Provided |

Example Item 2.4: Usage of the supported slice information (for the case when no dedicated priority configured for any slice) in RRCRelease message
• UE considers or determines the frequency with the largest number of the supported slices overlapped with the allowed/request S-NSSAI(s) to be associated with the highest priority.
• Example: As shown in Table 8 below, the UE considers or determines the frequency F3 (shown in bold italicized text) to be associated with the highest priority at least because the UE determines that F3 it has the largest number of the supported slices overlapped with the allowed/request S-NSSAI(s). And F3 remains to be associated with the highest priority within a time window when a timer has not expired, where the timer is configured (or indicated) together with the supported slice information in RRCRelease message.

**Table 8**

| Allowed S-NSSAI(s) | F1 | F2 | *F3* |
|---|---|---|---|
| Slice#1 | | supported | |
| Slice#2 | supported | | *supported* |
| Slice#3 | supported | | *supported* |
| Slice#4 | | supported | *supported* |

• UE considers or determines the frequency supporting the first slice in the allowed/request S-NSSAI(s) to be associated with the highest priority.
• Example: As shown in Table 9 below, the UE considers or determines frequency F2 (shown in bold italicized text) to be associated with the highest priority at least because the UE determines that F2 supports the first slice in the allowed/request S-NSSAI(s). And F2 remains to be associated with the highest priority within a time window when a timer has not expired, where the timer is configured (or indicated) together with the supported slice information in RRCRelease message.

**Table 9**

| Allowed S-NSSAI(s) | F1 | ***F2*** | F3 |
|---|---|---|---|
| Slice#1 | | ***supported*** | |
| Slice#2 | supported | | supported |
| Slice#3 | supported | | supported |
| Slice#4 | | ***supported*** | supported |

• If more than one frequency supports the first slice in the allowed/request S-NSSAI(s), the frequency configured with higher reselection priority (e.g., the dedicated reselection priority) will be considered as the highest priority.
• Example: As shown in Table 10 below, although both F2 and F3 support slice#1 (e.g., the first slice in the allowed/request S-NSSAI(s)), the dedicated reselection priority configured for F3 (show in bold italicized text) is higher than that of F2. UE considers or determines F3 to be associated with the highest priority within a time window when a timer has not expired, where the timer is configured together with the supported slice information in RRCRelease message.

**Table 10**

| | | F1 | F2 | ***F3*** |
|---|---|---|---|---|
| Dedicated reselection priority | | 2 | 4 | ***6*** |
| Allowed S-NSSAI(s) | Slice#1 | | supported | ***supported*** |
| | Slice#2 | supported | | ***supported*** |
| | Slice#3 | supported | | ***supported*** |
| | Slice#4 | | supported | ***supported*** |

Example Item 2.5: Usage of the redirection target information per slice in RRCRelease message
• UE applies the redirection target information corresponding to the first slice in allowed/requested S-NSSAI(s), if configured. In some embodiments, for each of a plurality of slices, a redirection target information can indicate a frequency as the target for cell (re)selection for a slice. In some embodiments, for each of a plurality of slices, a redirection target information can indicate a single frequency to use for the cell (re)selection technique for a slice. If no redirection target information is configured for the first slice, UE applies the common redirection target information.
• Example: As shown in Table 11 below, the UE applies the redirection target information configured for slice#1 (shown in bold italicized text) at least because the UE determines that slice #1 is the first slice in the allowed/requested S-NSSAI(s).

**Table 11**

| Allowed S-NSSAI(s) | Redirection target information |
|---|---|
| ***Slice#1*** | ***Provided*** |
| Slice#2 | |
| Slice#3 | Provided |

• UE applies the redirection target information corresponding to the first slice with per slice redirection target information configured.
• Example: As shown in Table 12 below, the UE applies the redirection target information configured for slice#2 (shown in bold italicized text) at least because the UE determines that slice #2 is the first slice with specific redirection target information configured among the slices in allowed/requested S-NSSAI(s).

**Table 12**

| Allowed S-NSSAI(s) | Redirection target information |
|---|---|
| Slice#1 | |
| ***Slice#2*** | ***Provided*** |
| Slice#3 | Provided |

Example Item 3: At operation 102 in FIG. 1, the RACH configuration per slice/slice group/access category/access category group/UE type may include any one or more of the following:
• 2-step and/or 4-step RACH common and dedicated resources (e.g., RACH occasions (ROs) in frequency and time domain and/or preambles) for a slice/slice group/access category/access category group/UE type/service type.
   ▪ The UE type can be: UE with reduced capability, or UE supporting coverage enhancement, or UE supporting small data transmission, or UE initiating small data transmission.
   ▪ Separate ROs by prach-ConfigurationIndex / msg1-FDM / msg1-FrequencyStart / msgA-PRACH-ConfigurationIndex / msgA-RO-FDM / msgA-RO-FrequencyStart in addition to the existing RACH-ConfigGeneric for a slice/slice group/access category/access category group/a specific UE type.
   ▪ Separate preambles per slice/slice group/access category/access category group/UE type in addition to the existing totalNumberOfRA-Preambles
      ∘ Example 1: ra-PreambleStartIndex and number of the preambles to be used for a certain slice/slice group/access category/access category group/UE type.
      ∘ Example 2: ra-PreambleStartIndex and ra-PreambleEndIndex of the preambles to be used for a certain slice/slice group/access category/access category group/UE type.
   ▪ Associating the existing preambles to slice/slice group/access category/access category group/UE type, the preambles in the following examples are within the existing totalNumberOfRA-Preambles
      ∘ Example 1: ra-PreambleStartIndex and number of the preambles to be used for a certain slice/slice group/access category/access category group/UE type.
      ∘ Example 2: ra-PreambleStartIndex and ra-PreambleEndIndex of the preambles to be used for a certain slice/slice group/access category/access category group/UE type.
   ▪ Associating the existing ROs to slice/slice group/access category/access category group/UE type/service type by configuring sliceAssociationPeriod/sliceGroupAssociationPeriod/accessCategory AssociationP eriod/accessCategoryGroupAssociationPeriod/UEtypeAssociationPeriod/servicety peAssociationPeriod = N*PRACH association period (N=1,2,3,...). A sliceAssociationPeriodIndex/sliceGroupAssociationPeriodIndex/accessCategoryA ssociationPeriodIndex/accessCategoryGroupAssociationPeriodIndex/UEtypeAsso ciationPeriodIndex/servicetypeAssociationPeriodIndex will configured for each slice/slice group/access category/access category group/UE type.
   ▪ Associating the existing ROs/preambles to slice/slice group/access category/access category group/UE type/service type by configuring ra-PreambleStartIndex and number of the preambles + sliceAssociationPeriod and sliceAssociationPeriodIndex to be used for a certain slice, ra-PreambleStartIndex and number of the preambles + sliceGroupAssociationPeriod and sliceGroupAssociationPeriodIndex to be used for a certain slice group, ra-PreambleStartIndex and number of the preambles + accessCategory AssociationPeriod and accessCategory AssociationPeriodIndex to be used for a certain access category, ra-PreambleStartIndex and number of the preambles + accessCategoryGroupAssociationPeriod and accessCategoryGroupAssociationPeriodIndex to be used for a certain access category group, ra-PreambleStartIndex and number of the preambles + UETypeAssociationPeriod and UETypeAssociationPeriodIndex to be used for a certain UE type, or ra-PreambleStartIndex and number of the preambles + serviceTypeAssociationPeriod and serviceTypeAssociationPeriodIndex to be used for a certain service type.
   ▪ A network (NW) or a NW device, such as a base station, can define and assign a RACH resource identifier (ID) to some RACH occasions in frequency and/or time domain and/or preambles. For a slice/slice group/access category/access category group/UE type/service type, one or more RACH resources ID and be configured to reserved RACH resources specific for this slice/slice group/access category/access category group.
      ∘ One or more RACH resources ID can also be configured by the NW for a specific UE type, e.g., UE with reduced capability, UE supporting coverage enhancement or UE supporting small data transmission or UE initiating small data transmission, or a specific service, e.g. small data transmission.
      ∘ The NW can transmit one or more RACH resources ID in paging message/paging DCI/short Message for each paging record, indicating the RACH resources to be used when the paged UE initiates random access to respond to paging.
      ∘ The RACH resources ID can be explicitly assigned by NW. Or it can be the index from a RACH resources list, e.g. index 0 refers to the first RACH resources in the list, index 1 refers to the second RACH resources in the list.
   ▪ A use case indication can be provided for each RACH resources (e.g., RACH occasions in frequency and/or time domain and/or preambles) to indicate whether the RACH resources can be used by a certain UE type/service type/slice/slice group/access category group/access category.
      ∘ The indication can be provided from NW to UE in an explicit way by providing an ENUMERATED value for each UE type/service type/slice/slice group/access category group/access category or a bitmap with each bit refers to a certain UE type/service type/slice/slice group/access category group/access category.
      o For example, the following indication can be configured for certain RACH resources:
         o appliedtoRedCap ENUMERATED {true}, if set to true showing that this RACH resources can be used by RedCap UE.
         ∘ appliedtoCE ENUMERATED {true}, if set to true showing that this RACH resources can be used by UE supporting coverage enhancement.
         ∘ appliedtoSDT ENUMERATED {true}, if set to true showing that this RACH resources can be used by UE to initiate small data transmission (SDT).
         ∘ appliedtosliceBitmap BIT STRING (SIZE (maxNumberofsupportedslice)) OPTIONAL, the first bit in the bitmap with value 1 indicates the RACH resources can be applied for the first slice in the supported slice list, the second bit in the bitmap with value 1 indicates the RACH resources can be applied for the second slice in the supported slice list, and so on.
         o appliedtoslicegroupBitmap BIT STRING (SIZE (maxNumberofsupportedslicegroup)) OPTIONAL, the first bit in the bitmap with value 1 indicates the RACH resources can be applied for the first slice group in the supported slice group list, the second bit in the bitmap with value 1 indicates the RACH resources can be applied for the second slice group in the supported slice group list, and so on.
         ∘ appliedtoaccesscategoryBitmap BIT STRING (SIZE (maxNumberofsupportedaccesscategories)) OPTIONAL, the first bit in the bitmap with value 1 indicates the RACH resources can be applied for the first access category in the supported access category list, the second bit in the bitmap with value 1 indicates the RACH resources can be applied for the second access category in the supported access category list, and so on.
         ∘ appliedtoaccesscategorygroupBitmap BIT STRING (SIZE (maxNumberofsupportedaccesscategorygroup)) OPTIONAL, the first bit in the bitmap with value 1 indicates the RACH resources can be applied for the first access category group in the supported slice list, the second bit in the bitmap with value 1 indicates the RACH resources can be applied for the second access category group in the supported access category group list, and so on.
         ∘ The indication can also be provided in an implicit way. For example, some Msg3 repetition related configuration (which is used by UE supporting coverage enhancement) can be provided together with the RACH resources so that UE supporting coverage enhancement would be aware that such RACH resources can be used.
   ▪ The following RA-RNTI calculation can be defined to differentiate the slices/slice groups/access categories/access category groups: RA-RNTI = 1 + s_id + 14 × t_id + 14 × 80 × f_id + 14 × 80 × 8 × ul_carrier_id + 2 ×14 × 80 × 8 × slice_id/slicegroup_id/access category_id/access category_group_id/ ue_type_id/ service_type_id, where s_id is the index of the first OFDM symbol of the PRACH occasion (0 ≤ s_id < 14), t_id is the index of the first slot of the PRACH occasion in a system frame (0 ≤ t_id < 80), where the subcarrier spacing to determine t_id is based on the value of µ can be specified in clause 5.3.2 in TS 38.211, f_id is the index of the PRACH occasion in the frequency domain (0 ≤ f_id < 8), and ul_carrier_id is the UL carrier used for Random Access Preamble transmission (0 for NUL carrier, and 1 for SUL carrier).
• Random access prioritization configuration (e.g. powerRampingStepHighPriority and scalingFactorBI) for a slice/slice group/access category/access category group.
• Other random access related parameters for a slice/slice group/access category/access category group
   ▪ msgA-TransMax
   ▪ msgA-RSRP-Threshold

Example Item 4: At operation 104 in FIG. 1, UE applies the RACH configuration per slice/slice group/access category/access category group/UE type/Service type during random access procedure, which may include the UE performing any of the following operations in the example items 4.1 to 4.4:
Example Item 4.1: RACH type selection
   - For the case when a slice/slice group/access category/access category group/UE type/service type is either configured with 2-step or 4-step RACH resources, UE will apply the corresponding configuration (2-step or 4-step) for a certain slice/slice group/access category/access category group/UE type/service type.
   - For the case when a slice/slice group/access category/access category group/UE type/service type is configured with both 2-step and 4-step RACH resources, UE has to select from 2-step and 4-step.
      ▪ If the BWP selected for Random Access procedure is configured with both 2-step and 4-step RA type Random Access Resources for the intended slice/slice group/access category/access category group/UE type/service type, UE use the cell specific msgA-RSRP-Threshold to select RACH type. For example, if the RSRP of the downlink pathloss reference is above msgA-RSRP-Threshold, set the RA_TYPE to 2-stepRA.
      ▪ UE use msgA-RSRP-Threshold configured for this intended slice/slice group/access category/access category group/UE type/service type to select RACH type.
Example Item 4.2: RACH type fallback
   - For the case when a slice/slice group/access category/access category group/UE type/service type is configured with 2-step RACH resources
      ▪ 2-step RACH unsuccessful: For an intended slice/slice group/access category/access category group/UE type/service type configured with 2-step RACH resources, if the random access fails N (configured by msgA-TransMax) times, UE will perform 2-step/4-step RACH with common resources (e.g., not slice/slice group/access category/access category group/UE type/service type specific).
      ▪ 2-step RACH fallback to 4-step RACH: NW indicate fallbackRAR in MSGB, UE will obtain the MAC PDU to transmit from MSGA buffer and store it in the MSG3 buffer and continue to send MSG3.
   - For the case when a slice/slice group/access category/access category group/UE type/service type is configured with both 2-step and 4-step RACH resources
      ▪ 2-step RACH unsuccessful: For an intended slice/slice group/access category/access category group/UE type/service type, if the 2-step RACH is selected based on the msgA-RSRP-Threshold (slice/slice group/access category/access category group/UE type/service type specific/cell specific) but the random access fails N (configured by msgA-TransMax) times:
         ∘ Option 1: UE will perform 4-step RACH using resources configured for the same slice/slice group/access category/access category group/UE type/service type as that used by the 2-step RACH. And if the random access using the slice/slice group/access category/access category group/UE type/service type specific 4-step RACH resources fails N (configured by preambleTransMax) times, UE will perform random access based on the 2-step/4-step common RACH resources.
         ∘ Option 2: UE will perform 2-step RACH using the common resources. And if the random access using the common 2-step RACH resources fails N (configured by msgA-TransMax) times, UE will perform random access based on the 4-step slice specific RACH resources.
      ▪ 2-step fallback to 4-step RACH: NW indicate fallbackRAR in MSGB, UE will obtain the MAC PDU to transmit from MSGA buffer and store it in the MSG3 buffer and continue to send MSG3.
      ▪ 4-step slice specific unsuccessful:For a intended slice/slice group/access category/access category group/UE type/service type, if the 4-step RACH is selected based on the msgA-RSRP-Threshold (slice/slice group/access category/access category group/UE type/service type specific/cell specific) but the random access fails N (configured by msgA-TransMax) times:
         ∘ Option 1: UE performs 4-step RACH using the common RACH resources.
         ∘ Option 2: UE performs 2-step/4 step RACH using the common RACH resources.
Example Item 4.3: RACH prioritization parameter selection
   - For the case when both the RACH prioritization parameters for MPS/MCS and the RACH prioritization parameter for the intended slice/slice group/access category/access category group/UE type/service type are configured:

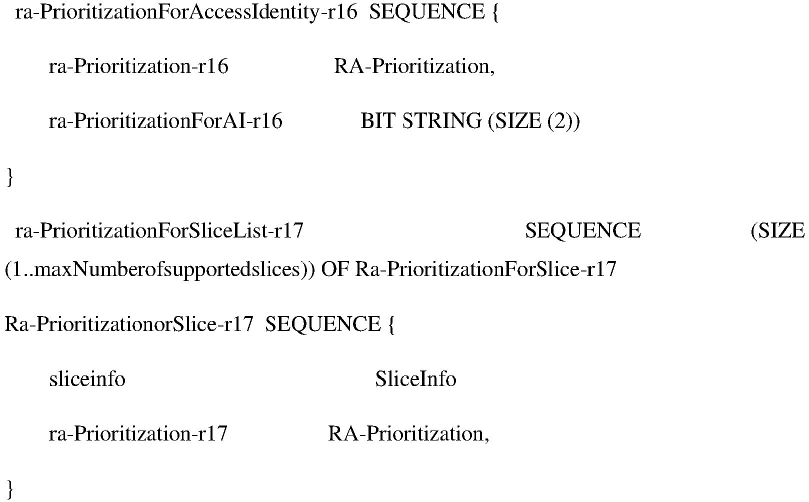

The access identity in the above ASN.1 code refers to the MPS/MCS.
- Option 1: MPS/MCS UE use the powerRampingStepHighPriority and scalingFactorBI configured for MPS/MCS.
- Option 2: MPS/MCS UE use the powerRampingStepHighPriority and scalingFactorBI configured for the intended slice/slice group/access category/access category group/UE type/Service type.
- Option 3: MPS/MCS UE use max{powerRampingStepHighPriority for AI, powerRampingStepHighPriority for slice/slice group/access category/access category group/UE type/service type} and min {scalingFactorBI for AI, scalingFactorBI for slice/slice group/access category/access category group/UE type/service type}.
- Option 4: Among the RACH parameters for MPS/MCS/slice/slice group/access category/access category group/UE type/Service type, UE apply the {scalingFactorBI, powerRampingStepHighPriority} set with largest value of powerRampingStepHighPriority.
- Option 5: Among the RACH parameters for MPS/MCS/slice/slice group/access category/access category group/UE type/Service type, UE apply the {scalingFactorBI, powerRampingStepHighPriority} set with smallest value of scalingFactorBI.
- For the case when NW provides more than one sets of RACH prioritization parameters for MPS/MCS and each set of RACH prioritization parameters for MPS/MCS are associated with a slice/slice group/access category/access category group/UE type/service type and a common RACH prioritization parameters for MPS/MCS which is applicable for all the slice/slice group/access category/access category group/UE type/service type, MPS/MCS UE would select the RACH prioritization parameters for MPS/MCS and is associated with the intended slice.

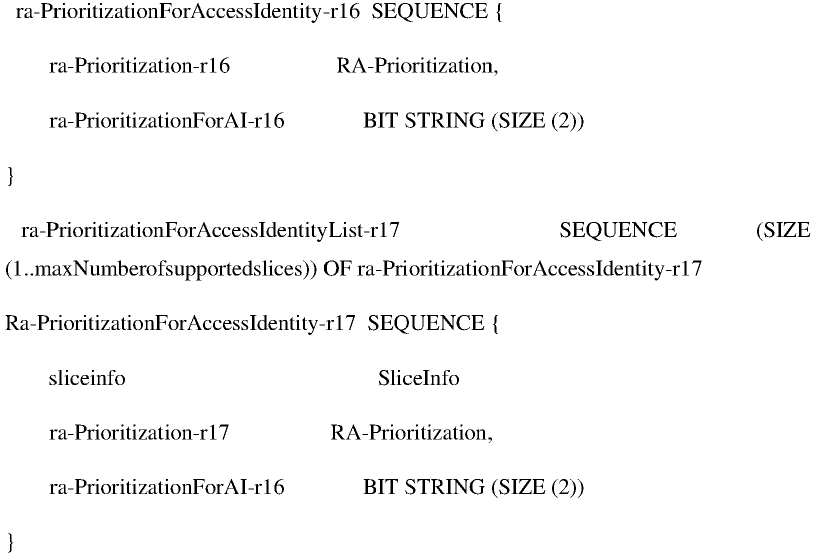

### Example Item 4.4: RACH resources selection

- UE will take one or more of the following information into consideration when selecting the RACH resources used for random access:
   ▪ The intended slice/slice group/access category/access category group
   ▪ The UE type, e.g. UE with reduced capability, or UE supporting coverage enhancement, or UE supporting small data transmission, or UE initiating small data transmission.
   ▪ The service type, e.g. small data transmission.
   ▪ For example, a UE with reduced capability tries to initiate small data transmission in slice#1 will select RACH resources applicable for reduced capability UE, small data transmission service and slice#1.
- For example, a UE with reduced capability tries to initiate small data transmission in slice#1 will select RACH resources applicable for reduced capability UE, small data transmission service or slice#1.
- For UE initiates random access procedure to respond to paging, NW may indicate the slice/slice group/access category/access category group/UE type/service type in the paging message/paging DCI/short Message.

The following sections describes several implementation examples. The example headings for the various sections below are used to facilitate the understanding of the disclosed subject matter and do not limit the scope of the claimed subject matter in any way. Accordingly, one or more features of one example section can be combined with one or more features of another example section. Furthermore, 5G terminology is used for the sake of clarity of explanation, but the techniques disclosed in the present document are not limited to 5G technology only, and may be used in wireless systems that implemented other protocols.

### 1. Implementation example 1:

UE receives the supported slice information with per slice priority of neighbor cells in system information as shown in Table 13 below. UE select the first slice (shown in bold italicized text) in the allowed/request S-NSSAI(s) and apply the reselection priority configured for the first slice.

**Table 13**

| Allowed S-NSSAI(s) | Reselection priority |
|---|---|
| ***Slice#1*** | ***Provided*** |
| Slice#2 | |
| Slice#3 | Provided |

The supported slice information with or without per slice priority of intra-frequency cells can be provided in SIB2 as shown in the bold italicized text in an example given below.

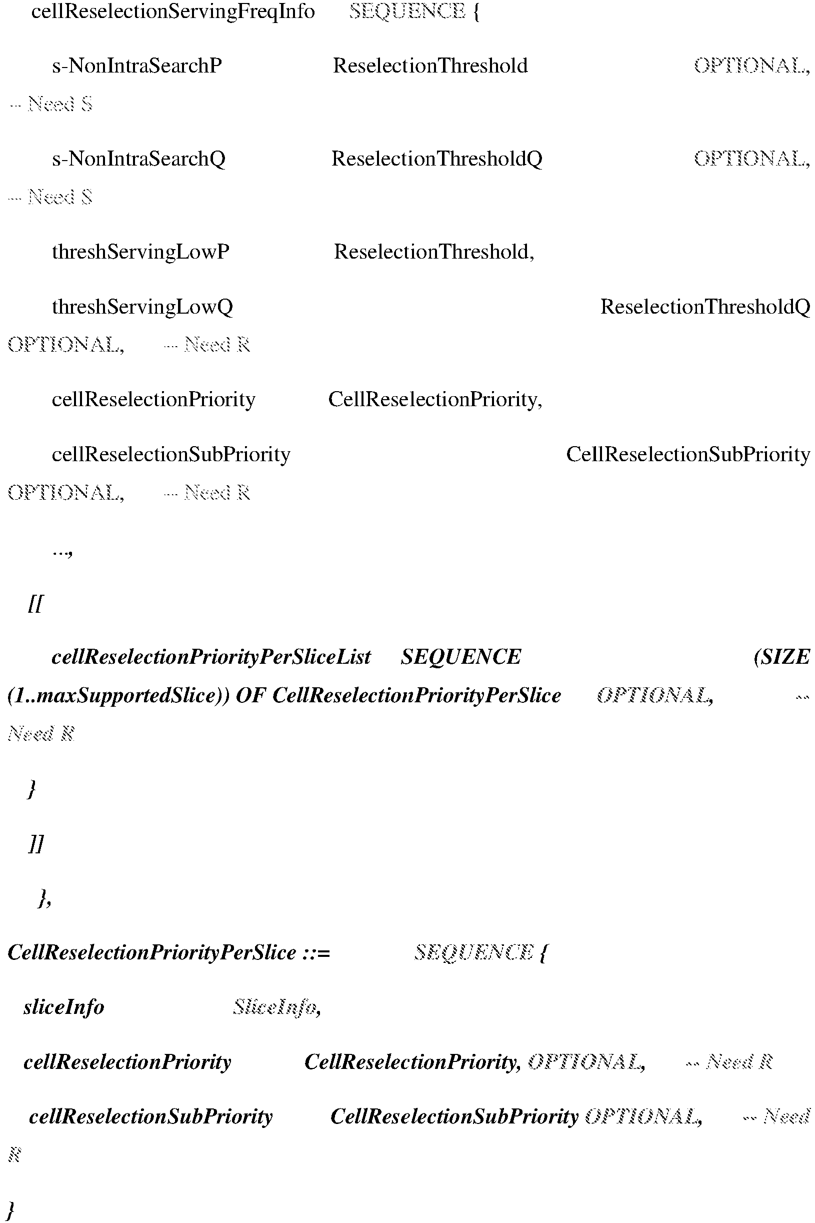

The supported slice information with or without per slice priority of inter-frequency cells can be provided in SIB4 as shown in the bold italicized text in an example given below:

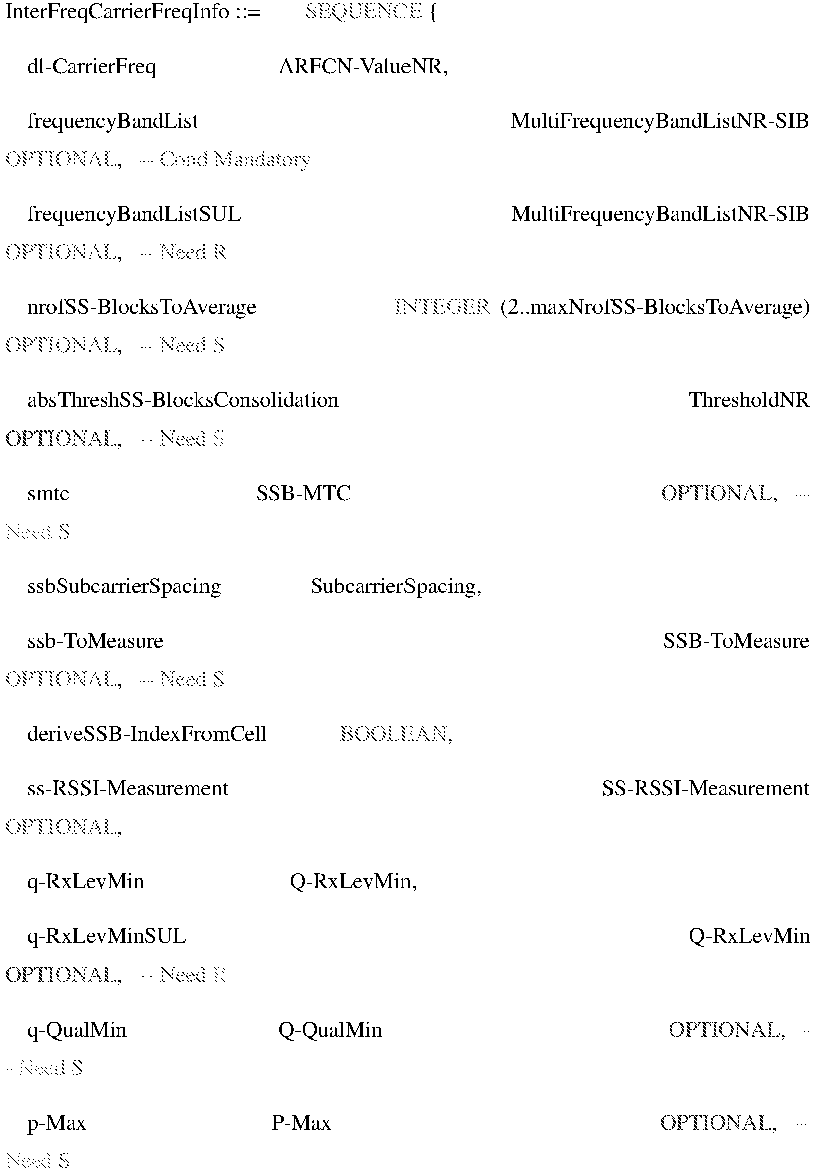

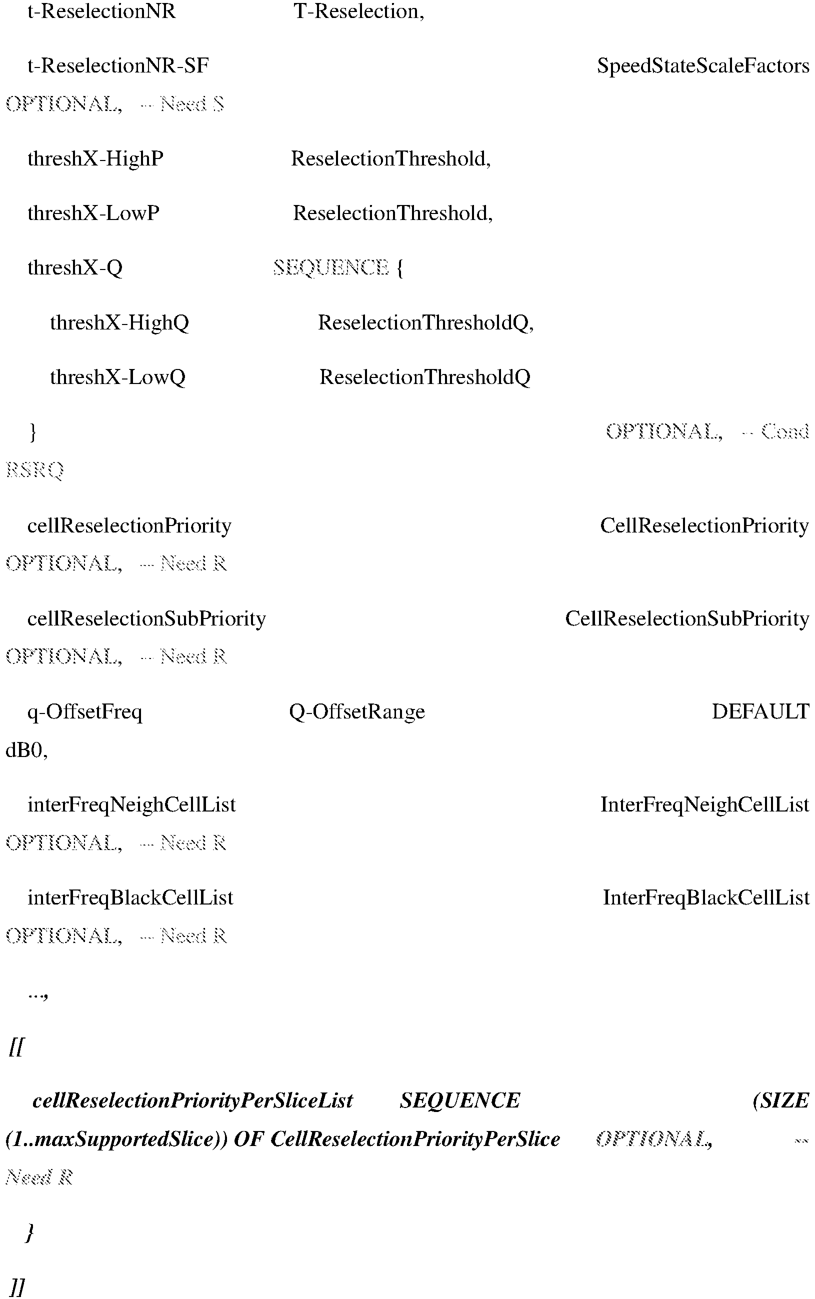

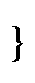

The supported slice information with or without per slice priority of inter-RAT cells can be provided in SIB5 as shown in the bold italicized text in an example given below.

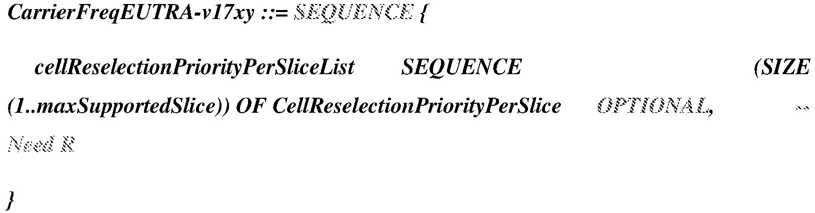

### II. Implementation example 2:

UE receives the supported slice information without per slice dedicated reselection priority of neighbor cells (as shown in Table 14 below) along with a timer txxx in RRCRelease message.

**Table 14**

| Allowed S-NSSAI(s) | F1 | F2 | ***F3*** |
|---|---|---|---|
| Slice#1 | | supported | |
| Slice#2 | supported | | ***supported*** |
| Slice#3 | supported | | ***supported*** |
| Slice#4 | | supported | ***supported*** |

UE starts Txxx with value set to txxx and consider the frequency with the largest number of supported slices overlapped with the allowed/request S-NSSAI(s) to be associated with the highest priority before Txxx expires.

The supported slice information with or without per slice priority for neighbour cells can be provided in RRCRelease message as shown in the bold italicized text in an example given below.

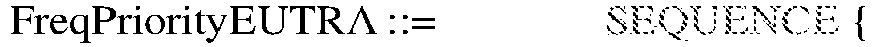

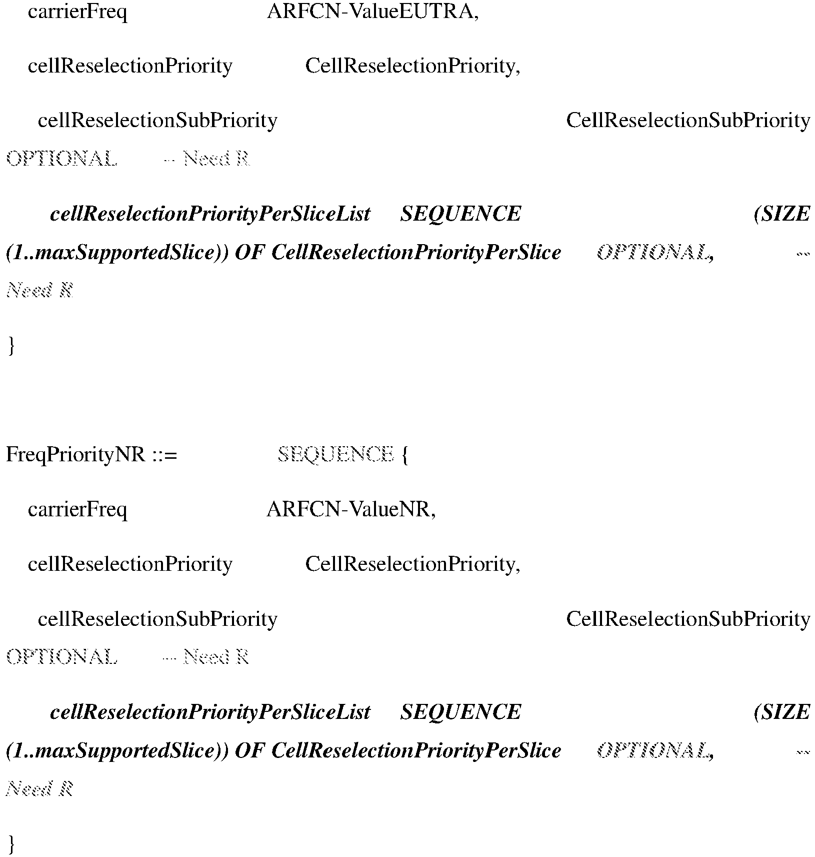

### III.Implementation example 3:

UE receives the redirection configuration per slice (as showing Table 15 below) along with a timer txxx in RRCRelease message.

**Table 15**

| Allowed S-NSSAI(s) | Dedicated Reselection priority |
|---|---|
| Slice#1 | |
| ***Slice#2*** | ***Provided*** |
| Slice#3 | Provided |

UE starts Txxx with value set to txxx and applies the redirection configuration for the first slice with redirection target information configured (e.g., slice#2) before Txxx expires.

The redirection configuration per slice can be provided in RRCRelease message as shown in the bold italicized text in an example given below.

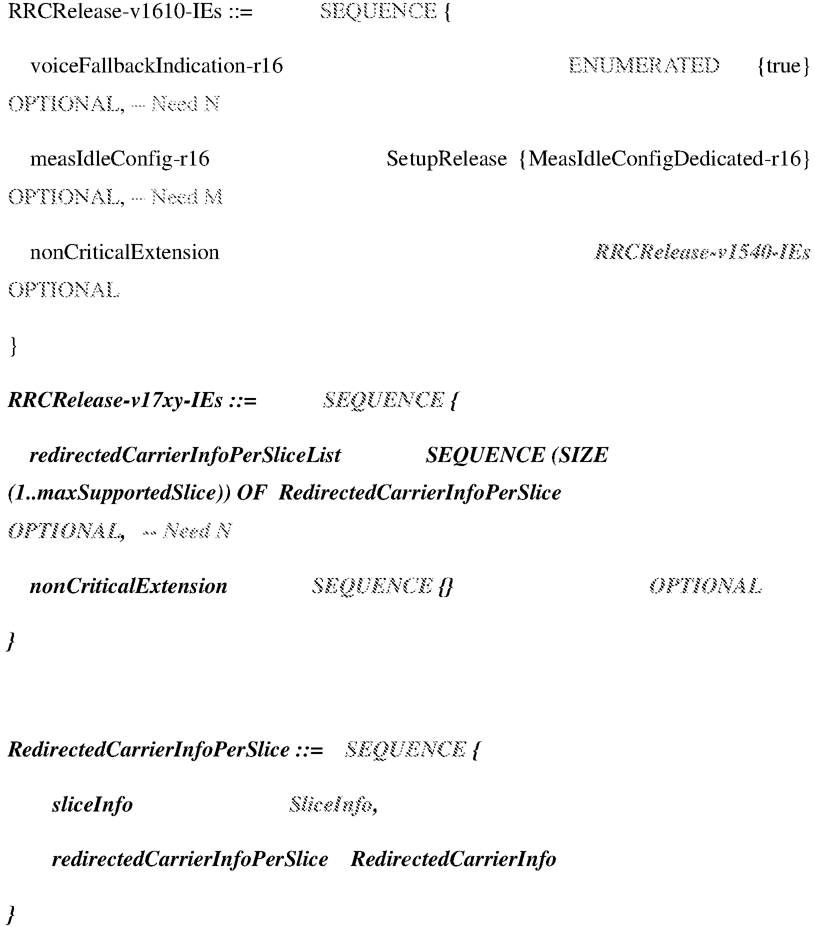

### IV. Implementation example 4:

UE receives 2-step CFRA resources or 4-step CFRA resources configured for the intended slice and use the 2-step CFRA resources or 4-step CFRA resources to initiate random access to the target cell after handover.

The 2-step CFRA resources or 4-step CFRA resources per slice can be provided in RRCReconfiguration message as shown in the bold italicized text in an example given below.

CFRA - 4-step-ASN.1 example 1:

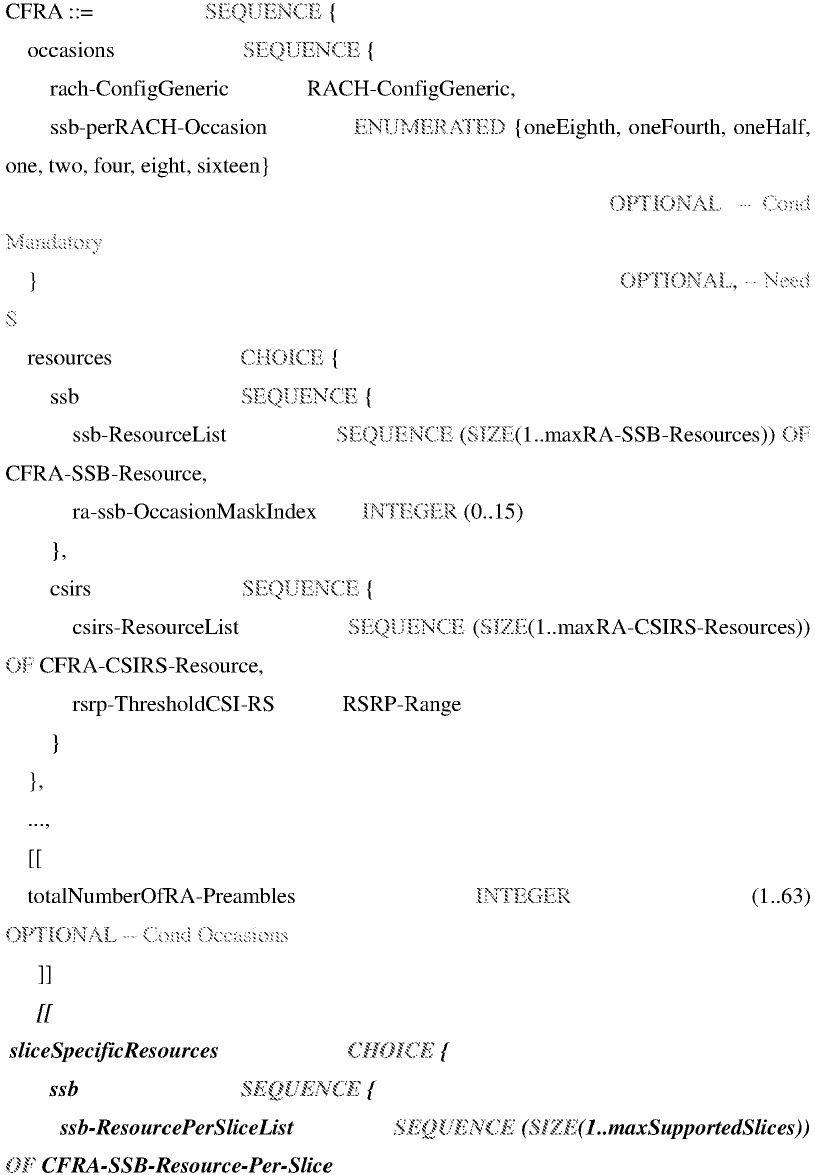

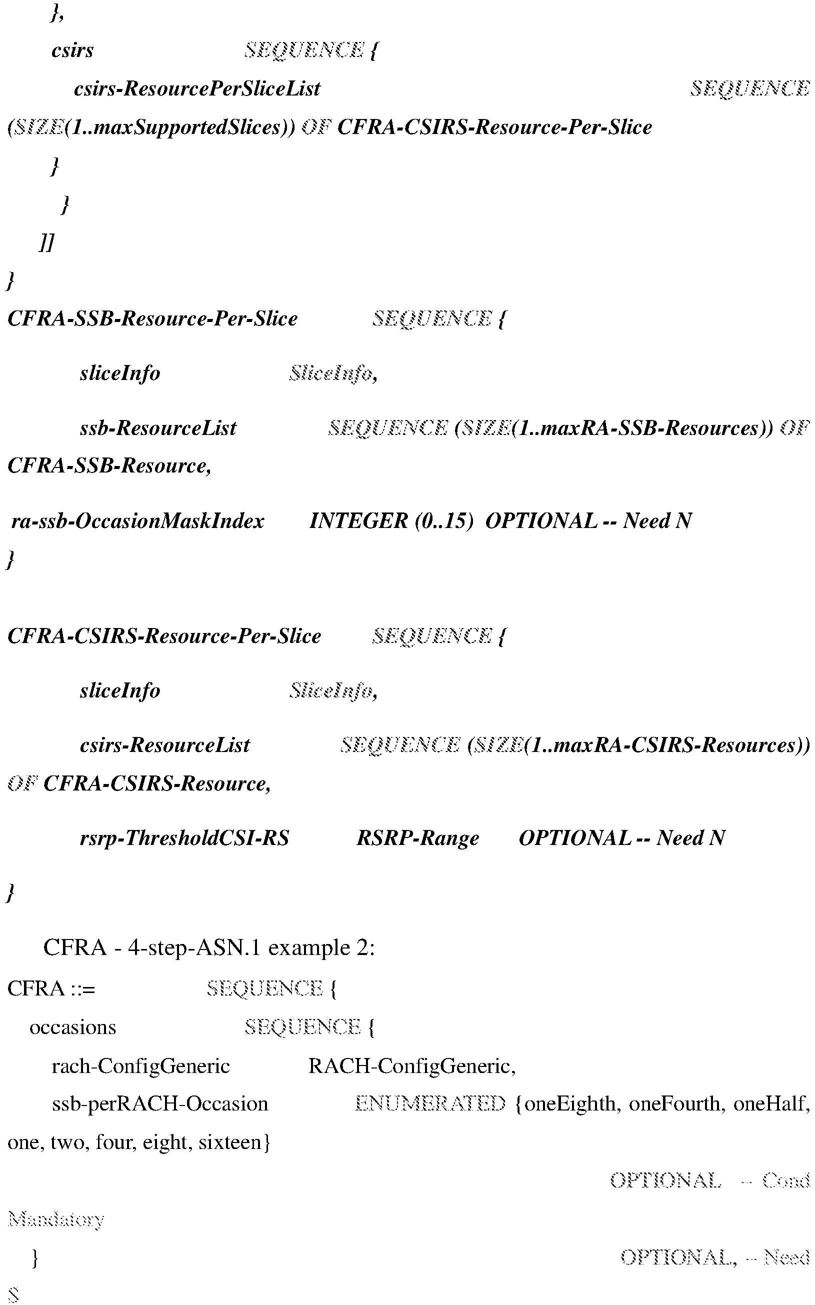

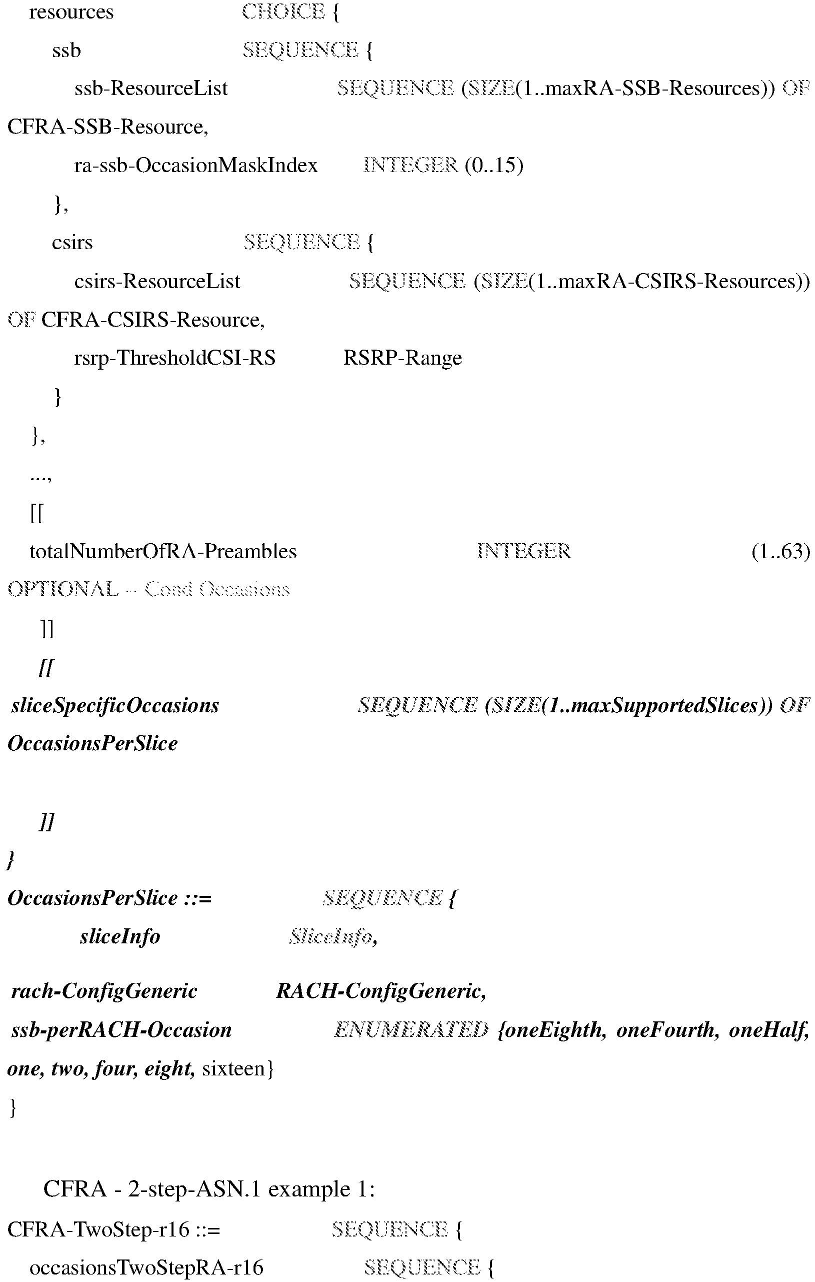

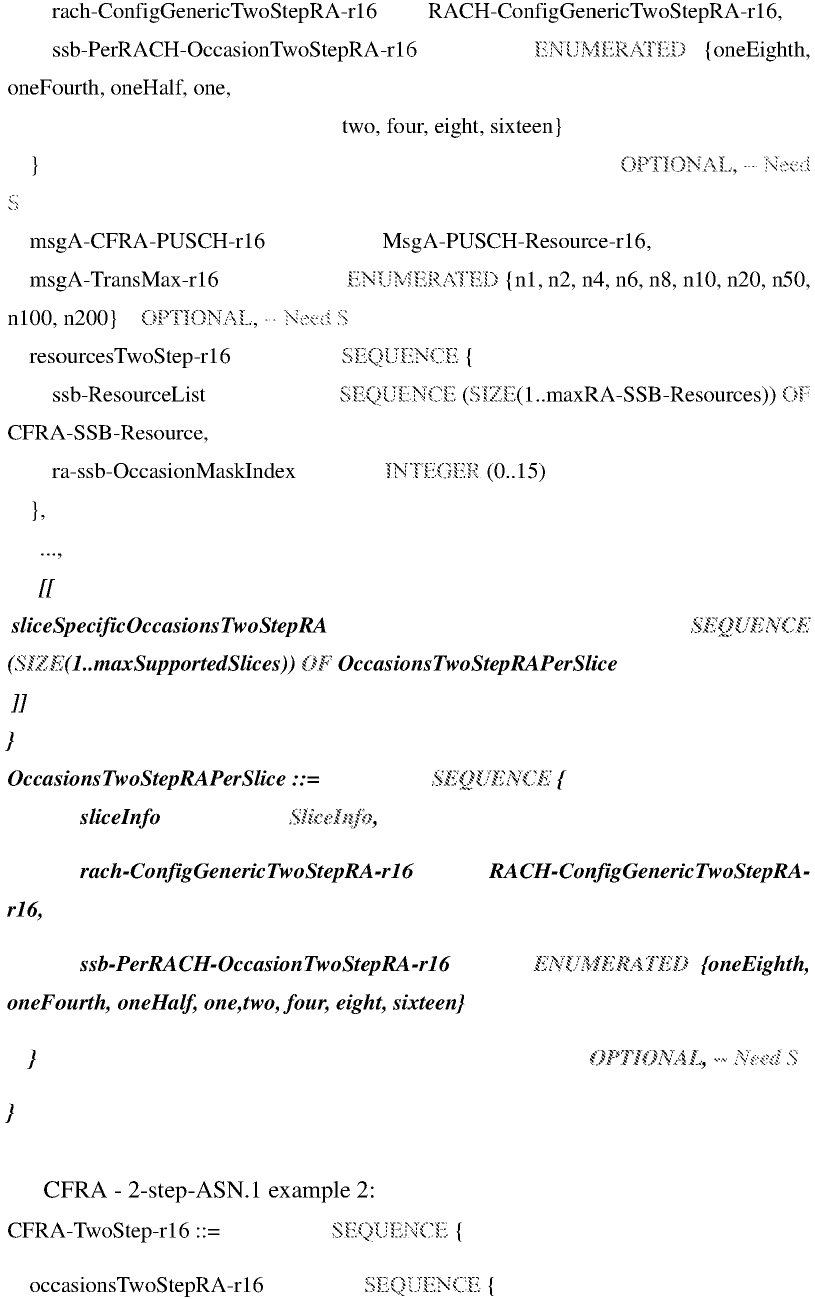

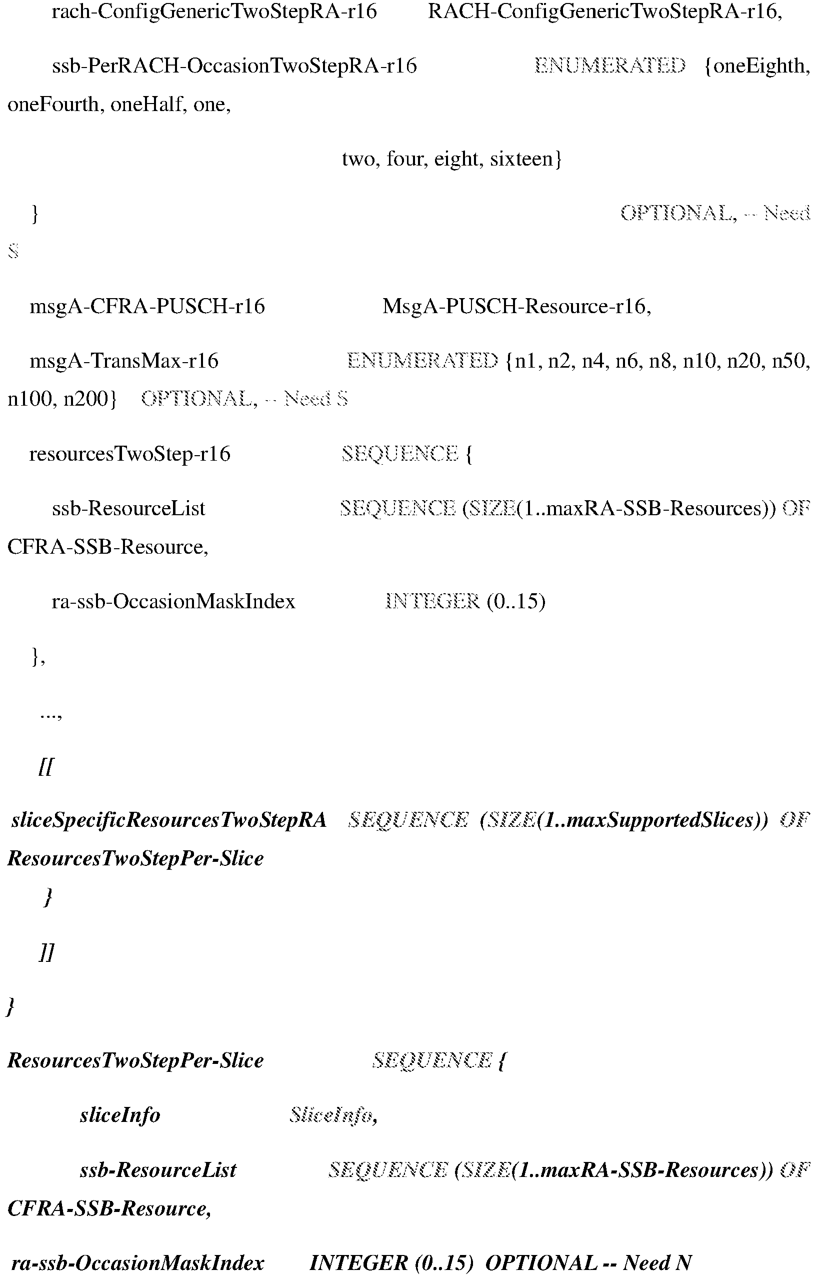

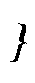

The example techniques described below for performing cell (re)selection and/or random access using cell (re)selection information and/or RACH configuration provided for each slice in a plurality of slices. In the example techniques described below, the term "slice" and "slices" can be respectively replaced with "slice group" and "slice groups", or "access category" and "access categories", or "access category group" and "access category groups," or "UE type" and "UE types," or "service type," or "service types."

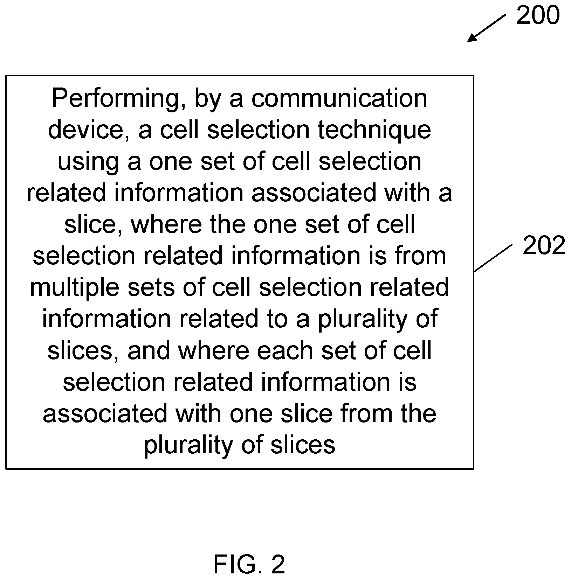

FIG. 2 shows an exemplary flowchart for a method 200 of performing a slice aware cell selection technique. Operation 202 includes performing, by a communication device, a cell selection technique using a one set of cell selection related information associated with a slice, where the one set of cell selection related information is from multiple sets of cell selection related information related to a plurality of slices, and where each set of cell selection related information is associated with one slice from the plurality of slices.

In some embodiments of method 200, the communication device selects or determines one set of cell selection related information associated with a slice from multiple sets of cell selection related information related to a plurality of slices; and performs a cell selection technique using the one set of cell selection related information associated with the slice, where each set of cell selection related information is associated with one slice from the plurality of slices.

In some embodiments of method 200, the multiple sets of cell selection related information include a supported slice information for each slice from the plurality of slices, and for each slice of the plurality of slices, the supported slice information indicates whether a slice is supported by a plurality of cells or by a plurality of frequencies. In some embodiments of method 200, the multiple sets of cell selection related information include a cell selection priority information for each slice from the plurality of slices, and for each slice of the plurality of slices, the cell selection priority information indicates a cell selection priority value for a slice, and the cell selection priority value indicates a priority of (1) a cell associated with the slice or (2) a frequency associated with the slice. In some embodiments of method 200, the multiple sets of cell selection related information include a redirection target information for each slice from the plurality of slices, and for each slice of the plurality of slices, the redirection target information indicates a frequency to use for the cell selection technique for a slice. In some embodiments of method 200, the communication device performs the cell selection technique with a cell by using a cell selection priority value of (1) the cell or (2) a frequency deployed by the cell, and the cell selection priority value is associated with the slice that is first in order in a list of slices in an allowed single network slice selection assistance information (S-NSSAI) or in a requested S-NSSAI.

In some embodiments of method 200, the communication device performs the cell selection technique with a cell by using a cell selection priority value of (1) the cell or (2) a frequency deployed by the cell, and the cell selection priority value is associated with any one of the following that is associated with the slice that is first in order in a list of slices in an allowed single network slice selection assistance information (S-NSSAI) or in a requested S-NSSAI: a slice group, an access category, and an access category group. In some embodiments of method 200, the communication device performs the cell selection technique with a cell by using a cell selection priority value of (1) the cell or (2) a frequency deployed by the cell, the slice is associated with the cell selection priority value, and the slice is, in an order, first to be associated with the cell selection priority value in a list of slices in an allowed single network slice selection assistance information (S-NSSAI) or in a requested S-NSSAI. In some embodiments of method 200, the communication device performs the cell selection technique with a cell by using a frequency having a highest priority, the frequency is associated with the cell, and the frequency has the highest priority in response to the frequency being associated with a largest number of supported slices from an allowed single network slice selection assistance information (S-NSSAI) or from a requested S-NSSAI.

In some embodiments of method 200, the communication device performs the cell selection technique with a cell by using a frequency having a highest priority, the frequency is associated with the cell, and the frequency has the highest priority in response to the frequency being supported by a the slice that is first in order in a list of slices in an allowed single network slice selection assistance information (S-NSSAI) or in a requested S-NSSAI. In some embodiments of method 200, the communication device performs the cell selection technique with a cell by using a frequency having a highest priority, the frequency is associated with the cell, and the frequency has the highest priority in response to the frequency being supported by any one of the following that is associated with the slice that is first in order in a list of slices in an allowed single network slice selection assistance information (S-NSSAI) or in a requested S-NSSAI: a slice group, an access category, and an access category group.

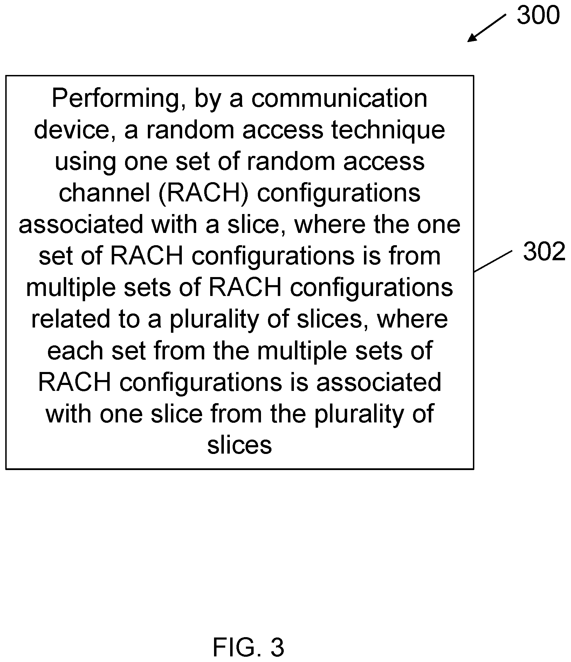

FIG. 3 shows an exemplary flowchart of a method 300 for performing a slice aware random access technique. Operation 302 includes performing, by a communication device, a random access technique using one set of random access channel (RACH) configurations associated with a slice, where the one set of RACH configurations is from multiple sets of RACH configurations related to a plurality of slices, where each set from the multiple sets of RACH configurations is associated with one slice from the plurality of slices.

In some embodiments of method 300, a communication device selects or determines one set of RACH configurations for a slice from multiple sets of RACH configurations related to a plurality of slices, where each set of RACH configurations is associated with one slice from the plurality of slices; and performs a random access technique using the one set of RACH configurations associated with the slice.

In some embodiments of method 300, the multiple sets of RACH configurations includes resources for performing a 2-step random access technique or a 4-step random access technique for each slice for the plurality of slices, the resources includes locations of RACH occasions in frequency domain and time domain, and the resources are common resources associated with a plurality of communication nodes or dedicated resources assigned to the communication node. In some embodiments of method 300, the multiple sets of RACH configurations include a random access prioritization configuration that indicates a configuration for a prioritized random access procedure for each slice of a plurality of slices. In some embodiments of method 300, the multiple sets of RACH configurations include a first value that indicates a maximum number of failed random access attempts allowed for each slice from the plurality of slices and a second value that indicates a threshold reference signal received power (RSRP) for each slice from the plurality of slices.

In some embodiments of method 300, the multiple sets of RACH configurations include a first value that indicates a maximum number of failed random access attempts allowed for each slice from the plurality of slices or a second value that indicates a threshold reference signal received power (RSRP) for each slice from the plurality of slices. In some embodiments of method 300, the communication device performs the random access technique by performing a 2-step random access technique or by performing a 4-step random access technique. In some embodiments of method 300, the communication device performs a 2-step random access technique or a 4-step random access technique by using common resources associated with a plurality of communication nodes in response to the communication device determining that the random access technique performed using the one set of RACH configurations associated with the slice has resulted in a failed outcome for a number of times. In some embodiments of method 300, the communication device performs a 4-step random access technique by using another set of RACH configurations associated with the slice or by using common resources associated with a plurality of communication nodes in response to the communication device determining that a 2-step random access technique performed using the one set of RACH configurations associated with the slice has resulted in a failed outcome for a number of times.

In some embodiments of method 300, the communication device performs the random access technique by using a first set of RACH prioritization parameters configured for the communication device configured for multimedia priority service (MPS) or for mission critical service (MCS), or the communication device performs the random access technique by using a second set of RACH prioritization parameters configured for a slice.

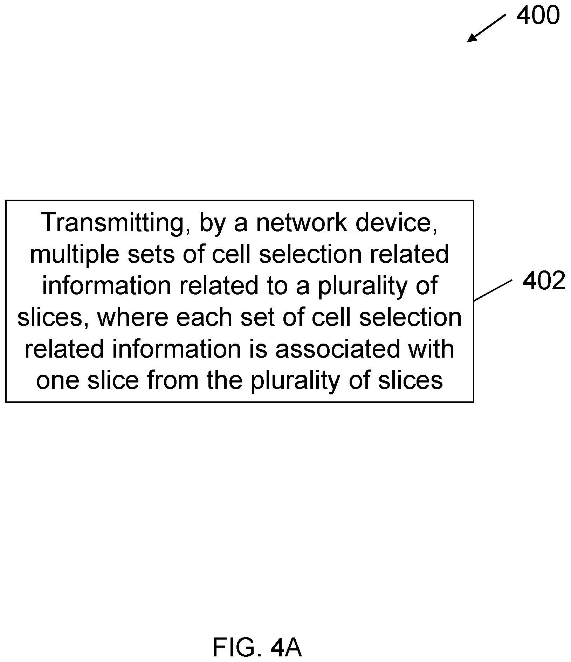

FIG. 4A shows a flowchart of a method 400 for a network device providing multiple sets of cell selection related information for multiple slices for a communication device to perform a slice aware cell selection technique. Operation 402 includes transmitting, by a network device, multiple sets of cell selection related information related to a plurality of slices, where each set of cell selection related information is associated with one slice from the plurality of slices.

In some embodiments of method 400, the multiple sets of cell selection related information include a supported slice information for each slice from the plurality of slices, and for each slice of the plurality of slices, the supported slice information indicates whether a slice is supported by a plurality of cells or by a plurality of frequencies. In some embodiments of method 400, the multiple sets of cell selection related information include a cell selection priority information for each slice from the plurality of slices, and for each slice of the plurality of slices, the cell selection priority information indicates a cell selection priority value for a slice, and the cell selection priority value indicates a priority of (1) a cell associated with the slice or (2) a frequency associated with the slice. In some embodiments of method 400, the multiple sets of cell selection related information include a redirection target information for each slice from the plurality of slices, and for each slice of the plurality of slices, the redirection target information indicates a frequency to use for the cell selection technique for a slice.

In some embodiments of method 400, the multiple sets of cell selection related information are transmitted via a system information to a plurality of communication devices comprising the communication device. In some embodiments of method 400, the multiple sets of cell selection related information are transmitted via a radio resource control (RRC) signaling dedicated to the communication device.

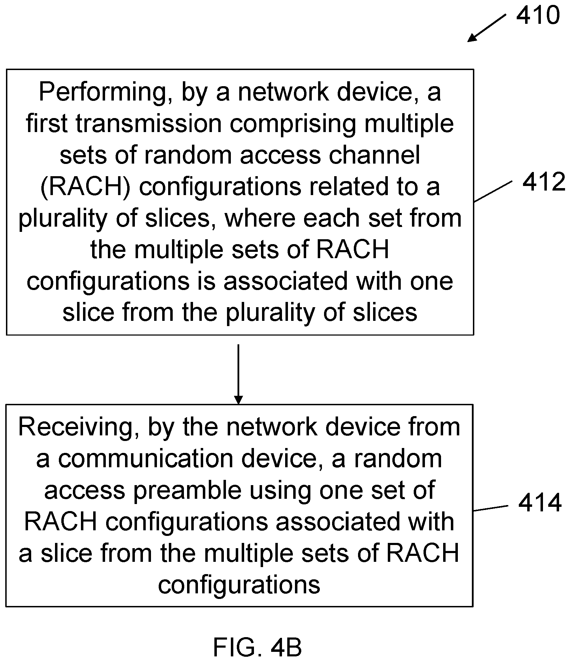

FIG. 4B shows flowchart of a method 410 for a network device providing multiple sets of RACH configurations for multiple slices for a communication device to perform a slice aware random access technique. Operation 412 includes performing, by a network device, a first transmission comprising multiple sets of random access channel (RACH) configurations related to a plurality of slices, where each set from the multiple sets of RACH configurations is associated with one slice from the plurality of slices. Operation 414 includes receiving, by the network device from a communication device, a random access preamble using one set of RACH configurations associated with a slice from the multiple sets of RACH configurations.

In some embodiments of method 410, the method further includes performing, by a network device, a second transmission comprising a message to the communication device, where the message comprises an identifier of the one set of RACH configurations associated with the slice to use by the communication device, and where the random access preamble is received in response to the second transmission of the message. In some embodiments of method 410, the message is included in a paging message or a paging downlink control information (DCI) or a short message. In some embodiments of method 410, the multiple sets of RACH configurations includes resources for performing a 2-step random access technique or a 4-step random access technique for each slice for the plurality of slices, the resources includes locations of RACH occasions in frequency domain and time domain, and the resources are common resources associated with a plurality of communication nodes or dedicated resources assigned to the communication node. In some embodiments of method 410, the multiple sets of RACH configurations include a random access prioritization configuration that indicates a configuration for a prioritized random access procedure for each slice of a plurality of slices.

In some embodiments of method 410, the multiple sets of RACH configurations include a first value that indicates a maximum number of failed random access attempts allowed for each slice from the plurality of slices and a second value that indicates a threshold reference signal received power (RSRP) for each slice from the plurality of slices. In some embodiments of method 410, the multiple sets of RACH configurations include a first value that indicates a maximum number of failed random access attempts allowed for each slice from the plurality of slices or a second value that indicates a threshold reference signal received power (RSRP) for each slice from the plurality of slices. In some embodiments of method 410, the first transmission comprising the multiple sets of RACH configurations is performed via a system information to a plurality of communication devices comprising the communication device. In some embodiments of method 410, the first transmission comprising the multiple sets of RACH configurations is performed via a radio resource control (RRC) signaling dedicated to the communication device.

In some embodiments, an apparatus for wireless communication comprising a processor, configured to implement operations recited for method(s) 200 to 410, and in the embodiments described in this patent document. In some embodiments, a non-transitory computer readable program storage medium having code stored thereon, the code, when executed by a processor, causing the processor to implement operations recited for method(s) 200 to 410, and in the embodiments described in this patent document.

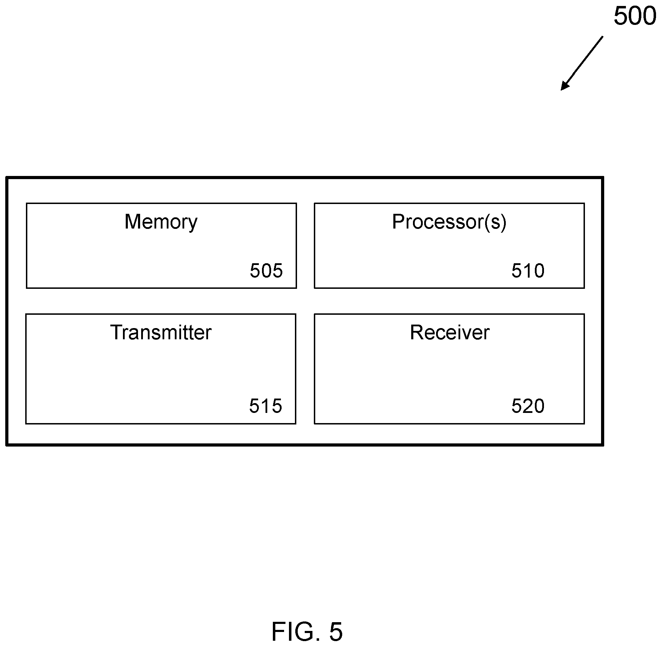

FIG. 5 shows an exemplary block diagram of a hardware platform 500 that may be a part of a network node (e.g., network device such as a base station) or a communication device (e.g., user equipment). The hardware platform 500 includes at least one processor 510 and a memory 505 having instructions stored thereupon. The instructions upon execution by the processor 510 configure the hardware platform 500 to perform the operations described in FIGS. 1 to 4B and in the various embodiments described in this patent document. The transmitter 515 transmits or sends information or data to another node. For example, a network node transmitter can send a message to a user equipment. The receiver 520 receives information or data transmitted or sent by another node. For example, a user equipment can receive a message from a network node.

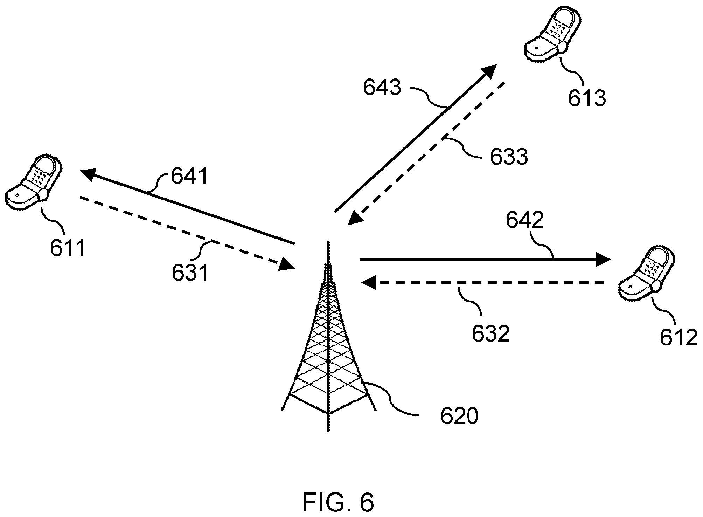

The implementations as discussed above will apply to a wireless communication. FIG. 6 shows an example of a wireless communication system (e.g., a 5G or NR cellular network) that includes a base station 620 and one or more user equipment (UE) 611, 612 and 613. In some embodiments, the UEs access the BS (e.g., the network) using a communication link to the network (sometimes called uplink direction, as depicted by dashed arrows 631, 632, 633), which then enables subsequent communication (e.g., shown in the direction from the network to the UEs, sometimes called downlink direction, shown by arrows 641, 642, 643) from the BS to the UEs. In some embodiments, the BS send information to the UEs (sometimes called downlink direction, as depicted by arrows 641, 642, 643), which then enables subsequent communication (e.g., shown in the direction from the UEs to the BS, sometimes called uplink direction, shown by dashed arrows 631, 632, 633) from the UEs to the BS. The UE may be, for example, a smartphone, a tablet, a mobile computer, a machine to machine (M2M) device, an Internet of Things (IoT) device, and so on.

The UE may be, for example, a smartphone, a tablet, a mobile computer, a machine to machine (M2M) device, an Internet of Things (IoT) device, and so on.

The following section describes additional example technical example items as described in this patent document:
In some embodiments, UE receives cell (re)selection information and/or RACH configuration per slice/slice group/access category/access category group/UE type and the UE applies the cell (re)selection information and/or RACH configuration during cell (re)selection and/or random access procedure.

In some embodiments, the cell (re)selection information per slice/slice group/access category/access category group/UE type further includes any one or more of the following:
- the supported slice information for each cell or frequency;
- the reselection priority for each slice/slice group/access category/access category group/UE type/service type;
- the redirection target information per slice/slice group/access category/access category group/UE type/service type.

In some embodiments, UE applies the cell (re)selection information per slice during the cell (re)selection procedure further include any one or more of the following:
- UE applies the reselection priority corresponding to the first slice in allowed/requested S-NSSAI(s) or the reselection priority corresponding to the slice group/access category/access category group the first slice belongs to;
- UE applies the reselection priority corresponding to the first slice/slice group/access category/access category group with per slice reselection priority configured;
- UE considers or determines the frequency with the largest number of the supported slices overlapped with the allowed/request S-NSSAI(s) to be associated with the highest priority;
- UE considers or determines the frequency supporting the first slice in the allowed/request S-NSSAI(s), or the frequency supporting the slice group/access category/access category group the first slice belongs to, to be associated with the highest priority.

In some embodiments, the RACH configuration per slice/slice group/access category/access category group/UE type further includes any one or more of the following:
- 2-step and/or 4-step RACH common and dedicated resources (RACH occasions in frequency and time domain and/or preambles) for a slice/slice group/access category/access category group/UE type/service type;
- Random access prioritization configuration (e.g. powerRampingStepHighPriority and scalingFactorBI) for a slice/slice group/access category/access category group/UE type/service type;
- msgA-TransMax or msgA-RSRP-Threshold for a slice/slice group/access category/access category group/UE type/service type.

In some embodiments, UE applies the RACH configuration per slice/slice group/access category/access category group/UE type/service type during random access procedure further includes any one or more of the following:
- UE select 2-step or 4-step random access type;
- UE perform 2-step or 4-step using common resources when random access using slice/slice group/access category/access category group/UE type/service type specific RACH resources fails a number of times:
- UE perform 4-step random access using slice/slice group/access category/access category group/UE type/service type specific 4-step RACH resources when 2-step random access using slice/slice group/access category/access category group/UE type/service type specific RACH resources fails a number of times, where the 4-step random access is performing using the same slice/same slice group/same access category/same access category group/UE type/service type as that used by the 2-step random access;
- UE select from the RACH prioritization parameters configured for MPS/MCS UE and RACH prioritization parameters configured for a slice/slice group/access category/access category group/UE type/service type.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment.

Only a few implementations and examples are described and other implementations, enhancements and variations can be made based on what is described and illustrated in this disclosure.

## Claims

1. A wireless communication method, comprising:
performing, by a communication device, a random access technique using one set of random access channel, RACH, configurations associated with a slice group,
wherein the one set of RACH configurations is from multiple sets of RACH configurations related to a plurality of slice groups,
wherein each set from the multiple sets of RACH configuration is associated with one slice group from the plurality of slice groups,
wherein the random access technique is performed using common or dedicated resources included in the one set of RACH configurations,
wherein the common or dedicated resources include a preamble start index and a number of preambles to be used for the slice group, and
wherein each resource from the common or dedicated resources has a use case indication that indicates whether the resource is used by the slice group.

2. The method of claim 1,
wherein the multiple sets of RACH configurations include a random access prioritization configuration that indicates a configuration for a prioritized random access procedure for each slice group of the plurality of slice groups.

3. The method of claim 1,
wherein the multiple sets of RACH configurations include a value that indicates a threshold reference signal received power, RSRP, for each slice group from the plurality of slice groups.

4. The method of claim 1,
wherein the communication device performs the random access technique by performing a 2-step random access technique or by performing a 4-step random access technique.

5. The method of claim 1,
wherein the communication device performs the random access technique by using a set of RACH prioritization parameters configured for a slice group.

6. The method of claim 1, wherein the UE type comprises a UE with reduced capability, the UE supporting coverage enhancement, the UE supporting small data transmission, the UE initiating small data transmission.

7. The method of claim 1, wherein the service type is a small data transmission.

8. A wireless communication method, comprising:
performing, by a network device, a first transmission to a communication device, wherein the first transmission comprises multiple sets of random access channel, RACH, configurations related to a plurality of slice groups,
wherein each set from the multiple sets of RACH configurations is associated with one slice group from the plurality of slice groups; and
receiving, by the network device from the communication device, a random access preamble using one set of RACH configurations associated with a slice group from the multiple sets of RACH configurations,
wherein common or dedicated resources are included in the one set of RACH configurations,
wherein the common or dedicated resources include a preamble start index and a number of preambles to be used for the slice group, and
wherein each resource from the common or dedicated resources has a use case indication that indicates whether the resource is used by the slice group.

9. The method of claim 8,
wherein the multiple sets of RACH configurations include a random access prioritization configuration that indicates a configuration for a prioritized random access procedure for each slice group of the plurality of slice groups.

10. The method of claim 8,
wherein the multiple sets of RACH configurations include a value that indicates a threshold reference signal received power, RSRP, for each slice group from the plurality of slice groups.

11. An apparatus for wireless communication comprising a processor, configured to implement a method, comprising:
performing, by a communication device, a random access technique using one set of random access channel, RACH, configurations associated with a slice group,
wherein the one set of RACH configuration is from multiple sets of RACH configuration related to a plurality of slice groups,
wherein each set from the multiple sets of RACH configuration is associated with one slice group from the plurality of slice groups,
wherein the random access technique is performed using common or dedicated resources included in the one set of RACH configurations,
wherein the common or dedicated resources include a preamble start index and a number of preambles to be used for the slice group, and
wherein each resource from the common or dedicated resources has a use case indication that indicates whether the resource is used by the slice group.

12. The apparatus of claim 11,
wherein the multiple sets of RACH configurations include a random access prioritization configuration that indicates a configuration for a prioritized random access procedure for each slice group of the plurality of slice groups.

13. The apparatus of claim 11,
wherein the multiple sets of RACH configurations include a value that indicates a threshold reference signal received power, RSRP, for each slice group from the plurality of slice groups.

14. The apparatus of claim 11,
wherein the communication device performs the random access technique by using a set of RACH prioritization parameters configured for a slice group.

15. An apparatus for wireless communication comprising a processor, configured to implement a method, comprising:
performing, by a network device, a first transmission to a communication device, wherein the first transmission comprises multiple sets of random access channel, RACH, configurations related to a plurality of slice groups,
wherein each set from the multiple sets of RACH configuration is associated with one slice group from the plurality of slice groups; and
receiving, by the network device from the communication device, a random access preamble using one set of RACH configurations associated with a slice group from the multiple sets of RACH configurations,
wherein common or dedicated resources are included in the one set of RACH configuration,
wherein the common or dedicated resources include a preamble start index and a number of preambles to be used for the slice group, and
wherein each resource from the common or dedicated resources has a use case indication that indicates whether the resource is used by the slice group.

16. The apparatus of claim 15,
wherein the multiple sets of RACH configurations include a random access prioritization configuration that indicates a configuration for a prioritized random access procedure for each slice group of the plurality of slice groups.

17. The apparatus of claim 15,
wherein the multiple sets of RACH configurations include a value that indicates a threshold reference signal received power, RSRP, for each slice group from the plurality of slice group.

## Patentansprüche

1. Drahtloses Kommunikationsverfahren, aufweisend:
Durchführen, durch eine Kommunikationsvorrichtung, einer Direktzugriffstechnik unter Verwendung eines Satzes von Direktzugriffskanal-Konfigurationen (RACH-Konfigurationen), die einer Slice-Gruppe zugeordnet sind,
wobei der eine Satz von RACH-Konfigurationen aus mehreren Sätzen von RACH-Konfigurationen ist, die sich auf mehrere Slice-Gruppen beziehen,
wobei jeder Satz aus den mehreren Sätzen der RACH-Konfiguration einer Slice-Gruppe aus den mehreren Slice-Gruppen zugeordnet ist,
wobei die Direktzugriffstechnik unter Verwendung gemeinsamer oder dedizierter Ressourcen durchgeführt wird, die in dem einen Satz von RACH-Konfigurationen umfasst sind,
wobei die gemeinsamen oder dedizierten Ressourcen einen Oberbegriffstartindex und eine Anzahl von Oberbegriffen einschließen, die für die Slice-Gruppe zu verwenden sind, und
wobei jede Ressource aus den gemeinsamen oder dedizierten Ressourcen eine Anwendungsfallindikation aufweist, die indiziert, ob die Ressource von der Slice-Gruppe verwendet wird.

2. Verfahren nach Anspruch 1,
wobei die mehreren Sätze von RACH-Konfigurationen eine Konfiguration für eine Priorisierung des Direktzugriffs einschließen, die eine Konfiguration für eine priorisierte Direktzugriffsvorgehensweise für jede Slice-Gruppe der mehreren Slice-Gruppen angibt.

3. Verfahren nach Anspruch 1,
wobei die mehreren Sätze von RACH-Konfigurationen einen Wert einschließen, der eine Schwellenwertreferenzsignalempfangsleistung (RSRP) für jede Slice-Gruppe aus den mehreren Slice-Gruppen angibt.

4. Verfahren nach Anspruch 1,
wobei die Kommunikationsvorrichtung die Direktzugriffstechnik durch Durchführen einer 2-Schritt-Direktzugriffstechnik oder durch Durchführen einer 4-Schritt-Direktzugriffstechnik durchführt.

5. Verfahren nach Anspruch 1, wobei die Kommunikationsvorrichtung die Direktzugriffstechnik unter Verwendung eines Satzes
von RACH-Priorisierungsparametern durchführt, die für eine Slice-Gruppe konfiguriert sind.

6. Verfahren nach Anspruch 1, wobei der UE-Typ eine UE mit eingeschränkter Leistungsfähigkeit, die UE, die eine Abdeckungsverbesserung unterstützt, die UE, die eine Übertragung kleiner Datenmengen unterstützt, die UE, die die Übertragung kleiner Datenmengen initiiert, aufweist.

7. Verfahren nach Anspruch 1, wobei der Diensttyp eine Übertragung kleiner Datenmengen ist.

8. Drahtloses Kommunikationsverfahren, aufweisend:
Durchführen, durch eine Netzwerkvorrichtung, einer ersten Übertragung an eine Kommunikationsvorrichtung, wobei die erste Übertragung mehrere Sätze von Direktzugriffskanal-Konfigurationen (RACH-Konfigurationen) aufweist, die sich auf mehrere Slice-Gruppen beziehen,
wobei jeder Satz aus den mehreren Sätzen von RACH-Konfigurationen einer Slice-Gruppe aus den mehreren Slice-Gruppen zugeordnet ist; und
Empfangen, durch die Netzwerkvorrichtung von der Kommunikationsvorrichtung, eines Direktzugriffoberbegriffs unter Verwendung eines Satzes von RACH-Konfigurationen, der einer Slice-Gruppe aus den mehreren Sätzen von RACH-Konfigurationen zugeordnet ist,
wobei gemeinsame oder dedizierte Ressourcen in dem einen Satz von RACH-Konfigurationen umfasst sind,
wobei die gemeinsamen oder dedizierten Ressourcen einen Oberbegriffstartindex und eine Anzahl von Oberbegriffen einschließen, die für die Slice-Gruppe zu verwenden sind, und
wobei jede Ressource aus den gemeinsamen oder dedizierten Ressourcen eine Anwendungsfallindikation aufweist, die indiziert, ob die Ressource von der Slice-Gruppe verwendet wird.

9. Verfahren nach Anspruch 8,
wobei die mehreren Sätze von RACH-Konfigurationen eine Konfiguration für die Priorisierung des Direktzugriffs einschließen, die eine Konfiguration für eine priorisierte Direktzugriffsvorgehensweise für jede Slice-Gruppe der mehreren Slice-Gruppen angibt.

10. Verfahren nach Anspruch 8,
wobei die mehreren Sätze von RACH-Konfigurationen einen Wert einschließen, der eine Schwellenwertreferenzsignalempfangsleistung (RSRP)
für jede Slice-Gruppe aus den mehreren Slice-Gruppen angibt.

11. Einrichtung für drahtlose Kommunikation, aufweisend einen Prozessor, der konfiguriert ist, ein Verfahren zu implementieren, aufweisend:
Durchführen, durch eine Kommunikationsvorrichtung, einer Direktzugriffstechnik unter Verwendung eines Satzes von Direktzugriffskanal-Konfigurationen (RACH-Konfigurationen), die einer Slice-Gruppe zugeordnet sind,
wobei der eine Satz einer RACH-Konfiguration aus mehreren Sätzen einer RACH-Konfiguration ist, die sich auf mehrere Slice-Gruppen beziehen,
wobei jeder Satz aus den mehreren Sätzen der RACH-Konfiguration einer Slice-Gruppe aus den mehreren Slice-Gruppen zugeordnet ist,
wobei die Direktzugriffstechnik unter Verwendung gemeinsamer oder dedizierter Ressourcen durchgeführt wird, die in dem einen Satz von RACH-Konfigurationen umfasst sind,
wobei die gemeinsamen oder dedizierten Ressourcen einen Oberbegriffstartindex und eine Anzahl von Oberbegriffen einschließen, die für die Slice-Gruppe zu verwenden sind, und
wobei jede Ressource aus den gemeinsamen oder dedizierten Ressourcen eine Anwendungsfallindikation aufweist, die indiziert, ob die Ressource von der Slice-Gruppe verwendet wird.

12. Einrichtung nach Anspruch 11,
wobei die mehreren Sätze von RACH-Konfigurationen eine Konfiguration für die Priorisierung des Direktzugriffs einschließen, die eine Konfiguration für eine priorisierte Direktzugriffsvorgehensweise für jede Slice-Gruppe der mehreren Slice-Gruppen angibt.

13. Einrichtung nach Anspruch 11,
wobei die mehreren Sätze von RACH-Konfigurationen einen Wert einschließen, der eine Schwellenwertreferenzsignalempfangsleistung (RSRP) für jede Slice-Gruppe aus den mehreren Slice-Gruppen angibt.

14. Einrichtung nach Anspruch 11,
wobei die Kommunikationsvorrichtung die Direktzugriffstechnik durch Verwenden eines Satzes von RACH-Priorisierungsparametern durchführt, die für eine Slice-Gruppe konfiguriert sind.

15. Einrichtung für drahtlose Kommunikation, aufweisend einen Prozessor, der konfiguriert ist, ein Verfahren zu implementieren, aufweisend:
Durchführen, durch eine Netzwerkvorrichtung, einer ersten Übertragung an eine Kommunikationsvorrichtung, wobei die erste Übertragung mehrere Sätze von Direktzugriffskanal-Konfigurationen (RACH-Konfigurationen) aufweist, die sich auf mehrere Slice-Gruppen beziehen,
wobei jeder Satz aus den mehreren Sätzen einer RACH-Konfiguration einer Slice-Gruppe aus den mehreren Slice-Gruppen zugeordnet ist; und
Empfangen, durch die Netzwerkvorrichtung von der Kommunikationsvorrichtung, eines Direktzugriffoberbegriffs unter Verwendung eines Satzes von RACH-Konfigurationen, der einer Slice-Gruppe aus den mehreren Sätzen von RACH-Konfigurationen zugeordnet ist,
wobei gemeinsame oder dedizierte Ressourcen in dem einen Satz der RACH-Konfiguration umfasst sind,
wobei die gemeinsamen oder dedizierten Ressourcen einen Oberbegriffstartindex und eine Anzahl von Oberbegriffen einschließen, die für die Slice-Gruppe zu verwenden sind, und
wobei jede Ressource aus den gemeinsamen oder dedizierten Ressourcen eine Anwendungsfallindikation aufweist, die indiziert, ob die Ressource von der Slice-Gruppe verwendet wird.

16. Einrichtung nach Anspruch 15,
wobei die mehreren Sätze von RACH-Konfigurationen eine Konfiguration für die Priorisierung des Direktzugriffs einschließen, die eine Konfiguration für eine priorisierte Direktzugriffsvorgehensweise für jede Slice-Gruppe der mehreren Slice-Gruppen angibt.

17. Einrichtung nach Anspruch 15,
wobei die mehreren Sätze von RACH-Konfigurationen einen Wert einschließen, der eine Schwellenwertreferenzsignalempfangsleistung (RSRP) für jede Slice-Gruppe aus den mehreren Slice-Gruppen angibt.

## Revendications

1. Procédé de communication sans fil, comprenant :
la réalisation, par un dispositif de communication, d'une technique d'accès aléatoire à l'aide d'un ensemble de configurations de canal d'accès aléatoire, RACH, associé à un groupe de tranches,
dans lequel ledit ensemble de configurations RACH provient de multiples ensembles de configurations RACH liés à une pluralité de groupes de tranches,
dans lequel chaque ensemble parmi les multiples ensembles de configurations RACH est associé à un groupe de tranches parmi la pluralité de groupes de tranches,
dans lequel la technique d'accès aléatoire est réalisée à l'aide de ressources communes ou dédiées incluses dans ledit ensemble de configurations RACH,
dans lequel les ressources communes ou dédiées comportent un indice de début de préambule et un nombre de préambules à utiliser pour le groupe de tranches, et
dans lequel chaque ressource parmi les ressources communes ou dédiées a une indication de cas d'utilisation qui indique si la ressource est utilisée par le groupe de tranches.

2. Procédé selon la revendication 1,
dans lequel les multiples ensembles de configurations RACH comportent une configuration de priorisation d'accès aléatoire qui indique une configuration pour une procédure d'accès aléatoire prioritaire pour chaque groupe de tranches parmi la pluralité de groupes de tranches.

3. Procédé selon la revendication 1,
dans lequel les multiples ensembles de configurations RACH comportent une valeur qui indique une puissance reçue de signal de référence seuil, RSRP, pour chaque groupe de tranches parmi la pluralité de groupes de tranches.

4. Procédé selon la revendication 1,
dans lequel le dispositif de communication réalise la technique d'accès aléatoire en réalisant une technique d'accès aléatoire à 2 étapes ou en réalisant une technique d'accès aléatoire à 4 étapes.

5. Procédé selon la revendication 1, dans lequel le dispositif de communication réalise la technique d'accès aléatoire en utilisant un ensemble
de paramètres de priorisation RACH configurés pour un groupe de tranches.

6. Procédé selon la revendication 1, dans lequel le type d'UE comprend un UE avec une capacité réduite, l'UE prenant en charge l'amélioration de couverture, l'UE prenant en charge la transmission de petites données, l'UE initiant une transmission de petites données.

7. Procédé selon la revendication 1, dans lequel le type de service est une transmission de petites données.

8. Procédé de communication sans fil, comprenant :
la réalisation, par un dispositif de réseau, d'une première transmission à un dispositif de communication, dans lequel la première transmission comprend de multiples ensembles de configurations de canal d'accès aléatoire, RACH, liés à une pluralité de groupes de tranches,
dans lequel chaque ensemble parmi les multiples ensembles de configurations RACH est associé à un groupe de tranches parmi la pluralité de groupes de tranches ; et
la réception, par le dispositif de réseau, à partir du dispositif de communication, d'un préambule d'accès aléatoire à l'aide d'un ensemble de configurations RACH associé à un groupe de tranches parmi les multiples ensembles de configurations RACH,
dans lequel des ressources communes ou dédiées sont incluses dans ledit ensemble de configurations RACH,
dans lequel les ressources communes ou dédiées comportent un indice de début de préambule et un nombre de préambules à utiliser pour le groupe de tranches, et
dans lequel chaque ressource parmi les ressources communes ou dédiées a une indication de cas d'utilisation qui indique si la ressource est utilisée par le groupe de tranches.

9. Procédé selon la revendication 8,
dans lequel les multiples ensembles de configurations RACH comportent une configuration de priorisation d'accès aléatoire qui indique une configuration pour une procédure d'accès aléatoire prioritaire pour chaque groupe de tranches parmi la pluralité de groupes de tranches.

10. Procédé selon la revendication 8,
dans lequel les multiples ensembles de configurations RACH comportent une valeur qui indique une puissance reçue de signal de référence seuil, RSRP,
pour chaque groupe de tranches parmi la pluralité de groupes de tranches.

11. Appareil pour une communication sans fil comprenant un processeur, configuré pour mettre en œuvre un procédé, comprenant :
la réalisation, par un dispositif de communication, d'une technique d'accès aléatoire à l'aide d'un ensemble de configurations de canal d'accès aléatoire, RACH, associé à un groupe de tranches,
dans lequel ledit ensemble de configurations RACH provient de multiples ensembles de configurations RACH liés à une pluralité de groupes de tranches,
dans lequel chaque ensemble parmi les multiples ensembles de configurations RACH est associé à un groupe de tranches parmi la pluralité de groupes de tranches,
dans lequel la technique d'accès aléatoire est réalisée à l'aide de ressources communes ou dédiées incluses dans ledit ensemble de configurations RACH,
dans lequel les ressources communes ou dédiées comportent un indice de début de préambule et un nombre de préambules à utiliser pour le groupe de tranches, et
dans lequel chaque ressource parmi les ressources communes ou dédiées a une indication de cas d'utilisation qui indique si la ressource est utilisée par le groupe de tranches.

12. Appareil selon la revendication 11,
dans lequel les multiples ensembles de configurations RACH comportent une configuration de priorisation d'accès aléatoire qui indique une configuration pour une procédure d'accès aléatoire prioritaire pour chaque groupe de tranches parmi la pluralité de groupes de tranches.

13. Appareil selon la revendication 11,
dans lequel les multiples ensembles de configurations RACH comportent une valeur qui indique une puissance reçue de signal de référence seuil, RSRP, pour chaque groupe de tranches parmi la pluralité de groupes de tranches.

14. Appareil selon la revendication 11,
dans lequel le dispositif de communication réalise la technique d'accès aléatoire en utilisant un ensemble de paramètres de priorisation RACH configuré pour un groupe de tranches.

15. Appareil pour une communication sans fil comprenant un processeur, configuré pour mettre en œuvre un procédé, comprenant :
la réalisation, par un dispositif de réseau, d'une première transmission à un dispositif de communication, dans lequel la première transmission comprend de multiples ensembles de configurations de canal d'accès aléatoire, RACH, liés à une pluralité de groupes de tranches,
dans lequel chaque ensemble parmi les multiples ensembles de configurations RACH est associé à un groupe de tranches parmi la pluralité de groupes de tranches ; et
la réception, par le dispositif de réseau, à partir du dispositif de communication, d'un préambule d'accès aléatoire à l'aide d'un ensemble de configurations RACH associé à un groupe de tranches parmi les multiples ensembles de configurations RACH,
dans lequel des ressources communes ou dédiées sont incluses dans ledit ensemble de configurations RACH,
dans lequel les ressources communes ou dédiées comportent un indice de début de préambule et un nombre de préambules à utiliser pour le groupe de tranches, et
dans lequel chaque ressource parmi les ressources communes ou dédiées a une indication de cas d'utilisation qui indique si la ressource est utilisée par le groupe de tranches.

16. Appareil selon la revendication 15,
dans lequel les multiples ensembles de configurations RACH comportent une configuration de priorisation d'accès aléatoire qui indique une configuration pour une procédure d'accès aléatoire prioritaire pour chaque groupe de tranches parmi la pluralité de groupes de tranches.

17. Appareil selon la revendication 15,
dans lequel les multiples ensembles de configurations RACH comportent une valeur qui indique une puissance reçue de signal de référence seuil, RSRP, pour chaque groupe de tranches parmi la pluralité de groupes de tranches.
